# EUROPÄISCHE PATENTSCHRIFT

(11) **EP 3 166 998 B1**
(45) Veröffentlichungstag und Bekanntmachung des Hinweises auf die Patenterteilung: **04.07.2018**
(21) Anmeldenummer: 15734381.5
(22) Anmeldetag: 07.07.2015
(51) Int. Cl.: C08J 5/18, C08L 27/06, C08K 5/11, C08K 5/12

(54) **FORMMASSEN ENTHALTEND DICARBONSÄUREESTER UND 1,2-CYCLOHEXANDICARBONSÄUREESTER**
MOULDING MATERIAL CONTAINING DICARBOXYLIC ACID ESTERS AND 1,2-CYCLOHEXANE DICARBOXYLIC ACID ESTERS
MASSES MOULÉES COMPRENANT UN ESTER D'ACIDE DICARBOXYLIQUE ET UN ESTER D'ACIDE CYCLOHEXANE-1,2-DICARBOXYLIQUE

(30) Priorität: 08.07.2014 EP 14176144
(43) Veröffentlichungstag der Anmeldung: 17.05.2017
(73) Patentinhaber: BASF SE, 67056 Ludwigshafen am Rhein (DE)
(72) Erfinder: PFEIFFER, Matthias, 67459 Böhl-Iggelheim (DE); BREITSCHEIDEL, Boris, 67165 Waldsee (DE); GRIMM, Axel, 67480 Edenkoben (DE); MORGENSTERN, Herbert, 67158 Ellerstadt (DE)
(74) Vertreter: BASF IP Association
(86) Internationale Anmeldenummer: PCT/EP2015/065422
(87) Internationale Veröffentlichungsnummer: WO 2016/005358

(56) Entgegenhaltungen:
- WO-A1-03/029339
- US-A1- 2004 015 007
- US-A1- 2004 138 358
- US-A1- 2013 022 825

## Beschreibung

### HINTERGRUND DER ERFINDUNG

Die vorliegende Erfindung betrifft Formmassen, enthaltend wenigstens ein Polymer und eine Weichmacher-Zusammensetzung, die wenigstens einen aliphatischen Dicarbonsäureester und wenigstens einen 1,2-Cyclohexandicarbonsäureester enthält, sowie die Verwendung dieser Weichmacher-Zusammensetzungen und Formmassen.

### STAND DER TECHNIK

Zur Erzielung gewünschter Verarbeitungs- bzw. Anwendungseigenschaften werden einer Vielzahl von Kunststoffen so genannte Weichmacher zugesetzt, um diese weicher, flexibler und/oder dehnbarer zu machen. Im Allgemeinen dient der Einsatz von Weichmachern dazu, den thermoplastischen Bereich von Kunststoffen zu niedrigeren Temperaturen hin zu verschieben, um im Bereich niedriger Verarbeitungs- und Einsatztemperaturen die gewünschten elastischen Eigenschaften zu erhalten.

Polyvinylchlorid (PVC) gehört zu den mengenmäßig meist hergestellten Kunststoffen. Aufgrund seiner vielseitigen Anwendbarkeit findet es sich heutzutage in einer Vielzahl von Produkten des täglichen Lebens. PVC wird daher eine sehr große wirtschaftliche Bedeutung zugemessen. PVC ist ursprünglich ein bis ca. 80 °C harter und spröder Kunststoff, der durch Zugabe von Thermostabilisatoren und anderen Zuschlagstoffen als Hart-PVC (PVC-U) eingesetzt wird. Erst durch die Zugabe geeigneter Weichmacher gelangt man zu Weich-PVC (PVC-P), das für viele Anwendungszwecke verwendet werden kann, für die Hart-PVC ungeeignet ist.

Weitere wichtige thermoplastische Polymere in denen üblicherweise Weichmacher Anwendung finden sind z. B. Polyvinylbutyral (PVB), Homo- und Copolymere von Styrol, Polyacrylate, Polysulfide oder thermoplastische Polyurethane (PU).

Ob sich eine Substanz zur Anwendung als Weichmacher für ein bestimmtes Polymer eignet, hängt weitgehend von den Eigenschaften des weichzumachenden Polymers ab. Erwünscht sind in der Regel Weichmacher, die eine hohe Verträglichkeit mit dem weichzumachenden Polymer aufweisen, d. h. diesem gute thermoplastische Eigenschaften verleihen und nur eine geringe Neigung zum Abdampfen und/oder Ausschwitzen (hohe Permanenz) besitzen.

Auf dem Markt ist eine Vielzahl verschiedener Verbindungen zur Weichmachung von PVC und weiteren Kunststoffen erhältlich. Aufgrund ihrer guten Verträglichkeit mit dem PVC und ihrer vorteilhaften anwendungstechnischen Eigenschaften wurden in der Vergangenheit vielfach Phthalsäurediester mit Alkoholen unterschiedlicher chemischer Struktur als Weichmacher eingesetzt, wie z. B. Diethylhexylphthalat (DEHP), Diisononylphthalat (DINP) und Diisodecylphthalat (DIDP). Kurzkettige Phthalate, wie beispielsweise Dibutylphthalat (DBP), Diisobutylphthalat (DIBP), Benzylbutylphthalat (BBP) oder Diisoheptylphthalat (DIHP), werden auch als Schnellgelierer ("fast fuser") eingesetzt, z. B. bei der Herstellung von so genannten Plastisolen. Neben den kurzkettigen Phthalaten können auch Dibenzoesäureester wie Dipropylenglycoldibenzoate zum gleichen Zwecke eingesetzt werden. Eine weitere Klasse von Weichmachern mit guten Geliereigenschaften, sind beispielsweise die Phenyl- und Cresylester von Alkylsulfonsäuren, die unter dem Markennamen Mesamoll® erhältlich sind.

Bei Plastisolen handelt es sich zunächst um eine Suspension von feinpulvrigen Kunststoffen in flüssigen Weichmachern. Dabei ist die Lösungsgeschwindigkeit des Polymers in dem Weichmacher bei Umgebungstemperatur sehr gering. Erst beim Erwärmen auf höhere Temperaturen löst sich das Polymer merklich im Weichmacher. Dabei quellen und fusionieren die einzelnen isolierten Kunststoffaggregate zu einem dreidimensionalen hochviskosen Gel. Dieser Vorgang wird als Gelieren bezeichnet und findet ab einer gewissen Mindesttemperatur statt, die als Gelier- oder Lösetemperatur bezeichnet wird. Der Schritt der Gelierung ist nicht reversibel.

Da Plastisole in flüssiger Form vorliegen, werden diese sehr häufig zum Beschichten von verschiedensten Materialien, wie z. B. Textilien, Glasvliesen etc., eingesetzt. Dabei wird die Beschichtung sehr häufig aus mehreren Lagen aufgebaut.

In der Praxis wird bei der Verarbeitung von Plastisolprodukten deshalb oftmals so vorgegangen, dass eine Schicht Plastisol aufgebracht wird und direkt im Anschluss der Kunststoff, insbesondere PVC, mit dem Weichmacher oberhalb der Lösetemperatur angeliert wird, also eine feste Schicht, bestehend aus einer Mischung aus gelierten, teilweise gelierten und nicht-gelierten Kunststoffpartikeln entsteht. Auf diese angelierte Schicht wird dann die nächste Lage aufgebracht und nach Aufbringen der letzten Schicht der Gesamtaufbau durch Erwärmen auf höhere Temperaturen komplett zum vollständig gelierten Kunststoffprodukt verarbeitet.

Neben Plastisolen können auch trockene pulverförmige Mischungen aus Weichmacher und Kunststoffen hergestellt werden. Solche Dry-Blends, insbesondere auf Basis PVC, können dann bei erhöhten Temperaturen, z. B. durch Extrusion, zu einem Granulat weiterverarbeitet oder durch herkömmliche Formgebungsverfahren, wie Spritzgießen, Extrudieren oder Kalandrieren, zum vollständig gelierten Kunststoffprodukt verarbeitet werden.

Aufgrund steigender technischer und wirtschaftlicher Anforderungen an die Verarbeitung thermoplastischer Polymere und Elastomere, sind zudem Weichmacher erwünscht, die gute Geliereigenschaften besitzen.

Insbesondere bei der Herstellung und Verarbeitung von PVC-Plastisolen, beispielsweise zur Herstellung von PVC-Beschichtungen, ist es unter anderem wünschenswert, einen Weichmacher mit niedriger Geliertemperatur als Schnellgelierer ("fast fuser") zur Verfügung zu haben. Darüber hinaus ist auch eine hohe Lagerstabilität des Plastisols gewünscht, d. h. das nicht-gelierte Plastisol soll bei Umgebungstemperatur keinen oder nur einen geringen Viskositätsanstieg mit der Zeit aufweisen. Diese Eigenschaften sollen möglichst durch Zugabe eines geeigneten Weichmachers mit Schnellgeliereigenschaften erzielt werden, wobei sich der Einsatz von weiteren viskositätsverringernden Additiven und/oder von Lösungsmitteln erübrigen soll.

Allerdings weisen Schnellgelierer in der Regel oft eine verbesserungswürdige Verträglichkeit mit den additivierten Polymeren und eine ebenfalls noch verbesserungswürdige Permanenz auf. Außerdem zeigen sie meistens eine hohe Flüchtigkeit sowohl bei der Verarbeitung als auch während des Gebrauchs der Endprodukte. Zudem wirkt sich der Zusatz von Schnellgelierern in vielen Fällen nachteilig auf die mechanischen Eigenschaften der Endprodukte aus. Zum Einstellen der gewünschten WeichmacherEigenschaften ist daher auch bekannt, Mischungen von Weichmachern einzusetzen, z. B. wenigstens einen Weichmacher, der gute thermoplastische Eigenschaften verleiht, aber weniger gut geliert, in Kombination mit wenigstens einem Schnellgelierer.

Des Weiteren besteht der Bedarf, zumindest einige der eingangs erwähnten Phthalat-Weichmacher zu ersetzen, da diese im Verdacht stehen, gesundheitsschädlich zu sein. Dies gilt speziell für sensible Anwendungsbereiche wie Kinderspielzeug, Lebensmittelverpackungen oder medizinische Artikel.

Im Stand der Technik sind verschiedene alternative Weichmacher mit unterschiedlichen Eigenschaften für diverse Kunststoffe und speziell für PVC bekannt.

Eine aus dem Stand der Technik bekannte Weichmacherklasse, die als Alternative zu Phthalaten eingesetzt werden kann, basiert auf Cyclohexanpolycarbonsäuren, wie sie in der WO 99/32427 beschrieben sind. Im Gegensatz zu ihren unhydrierten aromatischen Analoga sind diese Verbindungen toxikologisch unbedenklich und können auch in sensiblen Anwendungsbereichen eingesetzt werden.

Die WO 00/78704 beschreibt ausgewählte Dialkylcyclohexan-1,3- und 1,4-dicarbonsäureester für die Verwendung als Weichmacher in synthetischen Materialien.

Die US 7,973,194 B1 lehrt die Verwendung von Dibenzylcyclohexan-1,4-dicarboxylat, Benzylbutylcyclohexan-1,4-dicarboxylat und Dibutylcyclohexan-1,4-dicarboxylat als schnellgelierende Weichmacher für PVC.

Die EP 1354867 beschreibt isomere Benzoesäureisononylester, deren Gemische mit Phthalsäurealkylestern, Adipinsäurealkylestern oder Cyclohexandicarbonsäurealkylestern sowie ein Verfahren zu deren Herstellung. Weiterhin beschreibt die EP°1354867 die Verwendung der genannten Gemische als Weichmacher in Kunststoffen, insbesondere in PVC und PVC-Plastisolen. Um eine für Plastisolanwendungen ausreichend niedrige Geliertemperatur zu erreichen, müssen große Mengen dieser Benzoesäureisononylester eingesetzt werden. Zudem zeigen diese Weichmacher eine hohe Flüchtigkeit und deren Zusatz wirkt sich negativ auf die mechanischen Eigenschaften der Endprodukte aus.

Die EP 1415978 beschreibt isomerer Benzoesäuredodecylester, deren Gemische mit Phthalsäurealkylestern, Adipinsäurealkylestern oder Cyclohexandicarbonsäurealkylestern sowie die Verwendung dieser Gemische als Weichmacher für Polymere, insbesondere als Weichmacher für PVC und PVC-Plastisole. Um eine für Plastisolanwendungen ausreichend niedrige Geliertemperatur zu erreichen, müssen auch hier große Mengen dieser Benzoesäureisodecylester eingesetzt werden. Zudem zeigen diese Weichmacher ebenfalls eine hohe Flüchtigkeit und deren Zusatz wirkt sich negativ auf die mechanischen Eigenschaften der Endprodukte aus.

Die WO 03/029339 offenbart PVC-Zusammensetzungen enthaltend Mischungen aus Cyclohexanpolycarbonsäureestern mit verschiedenen schnellgelierenden Weichmachern. Als geeignete schnellgelierende Weichmacher werden insbesondere verschiedene Benzoate, aromatische Sulfonsäureester, Citrate sowie Phosphate genannt. Beiläufig werden in diesem Zusammenhang ebenfalls kurzkettige Dicarbonsäureester, wie Dibutyladipate, erwähnt. Allerdings wird explizit darauf hingewiesen, dass sich kurzkettige Dicarbonsäureester nur bedingt, d.h. in Mengen von weniger als 10 phr, als schnellgelierende Weichmacherkomponente in den beschriebenen PVC-Zusammensetzungen eignen, da größere Mengen zu einer ungewünscht hohen Weichmacher-Flüchtigkeit führen.

Der vorliegenden Erfindung liegt die Aufgabe zugrunde, eine Formmasse auf Polymerbasis zur Verfügung zu stellen, die eine Weichmacher-Zusammensetzung enthält, welche der Formmasse einerseits gute thermoplastische und mechanische Eigenschaften sowie andererseits gute Geliereigenschaften, d. h. eine möglichst niedrige Geliertemperatur und/oder eine geringe Viskosität im nicht gelierten Zustand, verleiht. Die Formmasse soll sich dadurch insbesondere zur Bereitstellung von Plastisolen eignen. Die in der Formmasse enthaltene Weichmacher-Zusammensetzung soll eine hohe Verträglichkeit mit dem weichzumachenden Polymer aufweisen, eine hohe Permanenz besitzen und zudem toxikologisch unbedenklich sein. Die Formmasse soll trotz der guten Geliereigenschaften eine geringe Weichmacherflüchtigkeit sowohl bei der Verarbeitung als auch während des Gebrauchs der Endprodukte zeigen.

Diese Aufgabe wird überaschenderweise gelöst durch eine Formmasse, enthaltend wenigstens ein Polymer und eine Weichmacher-Zusammensetzung, enthaltend
a) wenigstens eine Verbindung der allgemeinen Formel (I),

   R¹-O-C(=O)-X-C(=O)-O-R² (I)

   worin
   X für eine unverzweigte oder verzweigte C₂-C₈-Alkylengruppe oder eine unverzweigte oder verzweigte C₂-C₈-Alkenylengruppe, enthaltend wenigstens eine Doppelbindung, steht
      und
   R¹ und R² unabhängig voneinander ausgewählt sind unter C₃-C₅-Alkyl,
b) wenigstens eine Verbindung der allgemeinen Formel (II), 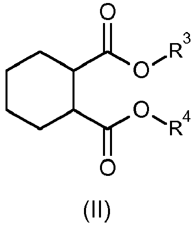 worin R³ und R⁴ unabhängig voneinander ausgewählt sind unter verzweigten und unverzweigten C₇-C₁₂-Alkylresten,
   wobei der Anteil der Verbindungen (I) in der Formmasse wenigstens 11 Gewichtsteile bezogen auf 100 Gewichtsteile Polymer (phr) beträgt.

Ein weiterer Gegenstand der Erfindung ist die Verwendung einer Weichmacher-Zusammensetzung, wie zuvor und im Folgenden definiert, als Weichmacher für thermoplastische Polymere, insbesondere Polyvinylchlorid (PVC), und Elastomere.

Ein weiterer Gegenstand der Erfindung ist die Verwendung einer Weichmacher-Zusammensetzung, wie zuvor und im Folgenden definiert, als Weichmacher in Plastisolen.

Ein weiterer Gegenstand der Erfindung ist die Verwendung dieser Formmasse zur Herstellung von Formkörpern und Folien.

### BESCHREIBUNG DER ERFINDUNG

Die erfindungsgemäßen Formmassen weisen die folgenden Vorteile auf:
- Die in den erfindungsgemäßen Formmassen enthaltenen Weichmacher-Zusammensetzungen zeichnen sich durch eine hohe Verträglichkeit mit den weichzumachenden Polymeren, insbesondere PVC, aus.
- Die in den erfindungsgemäßen Formmassen enthaltenen Weichmacher-Zusammensetzungen besitzen eine hohe Permanenz und verleihen den weichzumachenden Polymeren trotzdem exzellente Geliereigenschaften. Die erfindungsgemäßen Formmassen zeigen somit eine geringe Weichmacherflüchtigkeit sowohl bei deren Verarbeitung als auch während des Gebrauchs der Endprodukte.
- Die in den erfindungsgemäßen Formmassen enthaltenen Weichmacher-Zusammensetzungen eignen sich in vorteilhafter Weise zur Erzielung einer Vielzahl unterschiedlichster und komplexer Verarbeitungs- und Anwendungseigenschaften von Kunststoffen.
- Die erfindungsgemäße Formmasse eignet sich in vorteilhafter Weise für Plastisolanwendungen.
- Die in der erfindungsgemäß eingesetzten Weichmacher-Zusammensetzung enthaltenen Verbindungen (I) eignen sich aufgrund ihrer äußerst niedrigen Lösetemperaturen nach DIN 53408 sehr gut als Schnellgelierer. Um die Geliertemperatur des in den Formmassen enthaltenen Polymers zu verringern und/oder dessen Geliergeschwindigkeit zu erhöhen, reichen bereits relativ geringe Mengen der Verbindungen (I) in der erfindungsgemäß eingesetzten Weichmacher-Zusammensetzung aus.
- Die erfindungsgemäßen Formmassen eignen sich für die Verwendung zur Herstellung von Formkörpern und Folien für sensible Anwendungsbereiche, wie Medizinprodukte, Lebensmittelverpackungen, Produkte für den Innenraumbereich, beispielsweise von Wohnungen und Fahrzeugen, Spielzeuge, Kinderpflegeartikel, etc.
- Zur Herstellung der in den erfindungsgemäß eingesetzten Weichmacher-Zusammensetzungen enthaltenen Verbindungen (I) können leicht zugängliche Edukte verwendet werden.
- Die Verfahren zur Herstellung der erfindungsgemäß eingesetzten Verbindungen (I) sind einfach und effizient. Die Verbindungen (I) können daher problemlos in großtechnischem Maßstab bereitgestellt werden.

Wie zuvor erwähnt wurde überaschenderweise festgestellt, dass die in den erfindungsgemäß eingesetzten Weichmacher-Zusammensetzung enthaltenen Verbindungen der allgemeinen Formel (I) sehr niedrige Lösetemperaturen nach DIN 53408 aufweisen und sich diese dadurch speziell in Kombination mit 1,2-Cyclohexandicarbonsäureestern der allgemeinen Formel (II) zur Verbesserung des Gelierverhaltens von thermoplastischen Polymeren und Elastomeren eignen. Dabei sind bereits relativ geringe Mengen der Verbindungen (I) in der erfindungsgemäßen Weichmacher-Zusammensetzung ausreichend, um die zum Gelieren erforderliche Temperatur zu verringern und/oder die Geliergeschwindigkeit zu erhöhen.

Im Rahmen der vorliegenden Erfindung wird unter einem Schnellgelierer bzw. "fast fuser" ein Weichmacher verstanden, der eine Lösetemperatur nach DIN 53408 von unter 120 °C aufweist. Solche Schnellgelierer werden insbesondere zur Herstellung von Plastisolen verwendet.

Im Rahmen der vorliegenden Erfindung steht die zuvor oder im Folgenden verwendete Abkürzung phr (parts per hundred resin) für Gewichtsteile pro hundert Gewichtsteile Polymer.

Die Reste R¹ und R² in der allgemeinen Formel (I) stehen unabhängig voneinander für C₃- bis C₅-Alkyl. Im Rahmen der vorliegenden Erfindung umfasst der Ausdruck "C₃- bis C₅-Alkyl" geradkettige oder verzweigte C₃- bis C₅-Alkylgruppen. Dazu zählen n-Propyl, Isopropyl, n-Butyl, Isobutyl, sec.-Butyl, tert.-Butyl, n-Pentyl, 2-Pentyl, 2-Methylbutyl, 3-Methylbutyl, 1,2-Dimethylpropyl, 1,1-Dimethylpropyl, 2,2-Dimethylpropyl und 1-Ethylpropyl. Bevorzugt stehen die Reste R¹ und R² in der allgemeinen Formel (I) unabhängig voneinander für n-Butyl, Isobutyl, n-Pentyl, 2-Methylbutyl oder 3-Methylbutyl. Ganz besonders bevorzugt stehen die Reste R¹ und R² in der allgemeinen Formel (I) beide für n-Butyl.

Im Rahmen der vorliegenden Erfindung bezieht sich der Ausdruck "C₂-C₈-Alkylengruppe" auf zweiwertige Kohlenwasserstoffreste mit 2 bis 8 Kohlenstoffatomen. Die zweiwertigen Kohlenwasserstoffreste können unverzweigt oder verzweigt sein. Dazu zählen beispielsweise 1,2-Ethylen, 1,2-Propylen, 1,3-Propylen, 1,3-Butylen, 1,4-Butylen, 2-Methyl-1,3-propylen, 1,1-Dimethyl-1,2-ethylen, 1,4-Pentylen, 1,5-Pentylen, 2-Methyl-1,4-butylen, 2,2-Dimethyl-1,3-propylen, 1,6-Hexylen, 2-Methyl-1,5-pentylen, 3-Methyl-1,5-pentylen, 2,3-Dimethyl-1,4-butylen, 1,7-Heptylen, 2-Methyl-1,6-hexylen, 3-Methyl-1,6-hexylene, 2-Ethyl-1,5-pentylen, 3-Ethyl-1,5-pentylen, 2,3-Dimethyl-1,5-pentylen, 2,4-Dimethyl-1,5-pentylen, 1,8-Octylen, 2-Methyl-1,7-heptylen, 3-Methyl-1,7-heptylen, 4-Methyl-1,7-heptylen, 2-Ethyl-1,6-hexylen, 3-Ethyl-1,6-hexylen, 2,3-Dimethyl-1,6-hexylen, 2,4-Dimethyl-1,6-hexylen und dergleichen. Bevorzugt handelt es sich bei der C₂-C₈-Alkylengruppe um unverzweigte C₂-C₅-Alkylengruppen, insbesondere um 1,3-Propylen und 1,4-Butylen.

Im Rahmen der vorliegenden Erfindung handelt es sich bei der "C₂-C₈-Alkenylengruppe" um zweiwertige Kohlenwasserstoffreste mit 2 bis 8 Kohlenstoffatomen, welche unverzweigt oder verzweigt sein können, wobei die Hauptkette wenigstens eine Doppelbindung aufweist. Bevorzugt handelt es sich bei der "C₂-C₈-Alkenylengruppe" um verzweigte und unverzweigte C₂-C₆-Alkenylengruppen mit einer Doppelbindungen. Dazu zählen beispielsweise Ethenylen, Propenylen, 1-Methylethenylen, 1-, 2-Butenylen, 1-Methylpropenylen, 2-Methylpropenylen, 1-, 2-, Pentenylen, 1-Methyl-1-butenylen, 1-Methyl-2-butenylen, 1-, 2-, 3-Hexenylen, 1-Methyl-1-pentenylen, 1-Methyl-2-pentenylen, 1-Methyl-3-pentenylen, 1,4-Dimethyl-1-butenylen, 1,4-Dimethyl-2-butenylen und dergleichen. Besonders bevorzugt handelt es sich bei der "C₂-C₈-Alkenylengruppe" um eine unverzweigte C₂-C₄-Alkenylengruppe mit einer Doppelbindung.

Die Doppelbindungen in den C₂-C₈-Alkenylengruppen können unabhängig voneinander in der E- als auch in Z-Konfiguration oder als Mischung beider Konfigurationen vorliegen.

Bei den einfach oder mehrfach verzweigten C₂-C₈-Alkylengruppen und C₂-C₈-Alkenylengruppen, kann das Kohlenstoffatom am Verzweigungspunkt oder die Kohlenstoffatome an den jeweiligen Verzweigungspunkten, unabhängig voneinander eine R-, oder eine S-Konfiguration oder beide Konfigurationen zu gleichen oder unterschiedlichen Anteilen aufweisen.

Vorzugsweise steht X in den Verbindungen der allgemeinen Formel (I) für eine unverzweigte C₂-C₅-Alkylengruppen oder eine unverzweigte C₂-C₄-Alkenylengruppen mit einer Doppelbindung.

Besonders bevorzugt steht X in den Verbindungen der allgemeinen Formel (I) für eine unverzweigte C₂-C₅-Alkylengruppe, insbesondere für 1,3-Propylen und 1,4-Butylen.

Bevorzugte Verbindungen der allgemeinen Formel (I) sind ausgewählt unter
Di-(n-butyl)-glutarat,
Di-isobutyl-glutarat,
Di-(n-pentyl)-glutarat,
Di-(2-methylbutyl)-glutarat,
Di-(3-methylbutyl)-glutarat,
Di-(n-butyl)-adipat,
Di-isobutyl-adipat,
Di-(n-pentyl)-adipat,
Di-(2-methylbutyl)-adipat,
Di-(3-methylbutyl)-adipat
sowie Mischungen aus zwei oder mehr als zwei der zuvor genannten Verbindungen.

Eine besonders bevorzugte Verbindung der allgemeinen Formel (I) ist Di-(n-butyl)-adipat. Di-(n-butyl)-adipat ist kommerziell verfügbar, beispielweise unter dem Markennamen Cetiol®B der Firma BASF SE, Ludwigshafen.

In den Verbindungen der Formel (II) umfasst der Ausdruck "C₇-C₁₂-Alkyl" geradkettige und verzweigte C₇-C₁₂-Alkylgruppen. Vorzugsweise ist C₇-C₁₂-Alkyl ausgewählt unter n-Heptyl, 1-Methylhexyl, 2-Methylhexyl, 1-Ethylpentyl, 2-Ethylpentyl, 1-Propylbutyl, 1-Ethyl-2-methylpropyl, n-Octyl, Isooctyl, 2-Ethylhexyl, n-Nonyl, Isononyl, 2-Propylhexyl, n-Decyl, Isodecyl, 2-Propylheptyl, n-Undecyl, Isoundecyl, n-Dodecyl, Isododecyl und dergleichen. Besonders bevorzugt steht C₇-C₁₂-Alkyl für n-Octyl, n-Nonyl, Isononyl, 2-Ethylhexyl, Isodecyl, 2-Propylheptyl, n-Undecyl oder Isoundecyl.

In einer weiteren bevorzugten Ausführungsform haben in den Verbindungen der allgemeinen Formel (II) die Reste R³ und R⁴ dieselbe Bedeutung.

Bevorzugt stehen in den Verbindungen der allgemeinen Formel (II) die Reste R³ und R⁴ beide für 2-Ethylhexyl, beide für Isononyl oder beide für 2-Propylheptyl.

Eine besonders bevorzugte Verbindung der allgemeinen Formel (II) ist Di-(isononyl)-1,2-cyclohexandicarboxylat.

Durch Anpassung der Anteile der Verbindungen (I) und (II) in der erfindungsgemäß eingesetzten Weichmacher-Zusammensetzung können die WeichmacherEigenschaften auf den entsprechenden Verwendungszweck abgestimmt werden. Für den Einsatz in speziellen Anwendungsbereichen kann es gegebenenfalls hilfreich sein den erfindungsgemäß eingesetzten Weichmacher-Zusammensetzungen weitere von den Verbindungen (I) und (II) verschiedene Weichmacher hinzuzufügen. Aus diesem Grund kann die erfindungsgemäß eingesetzte Weichmacher-Zusammensetzung gegebenenfalls wenigstens einen weiteren von den Verbindungen (I) und (II) verschiedenen Weichmacher enthalten.

Der von den Verbindungen (I) und (II) verschiedene zusätzliche Weichmacher ist ausgewählt unter Phthalsäuredialkylestern, Phthalsäurealkylaralkylestern, Terephthalsäuredialkylestern, Trimellitsäuretrialkylestern, Benzoesäurealkylestern, Dibenzoesäureestern von Glycolen, Hydroxybenzoesäureestern, Estern von gesättigten Monocarbonsäuren, von Verbindungen (I) verschiedenen Estern gesättigter Dicarbonsäuren, von Verbindungen (I) verschiedenen Estern ungesättigter Dicarbonsäuren, Amiden und Estern von aromatischen Sulfonsäuren, Alkylsulfonsäureestern, Glycerinestern, Isosorbidestern, Phosphorsäureestern, Citronensäuretriestern, Alkylpyrrolidonderivaten, 2,5-Furandicarbonsäureestern, 2,5-Tetrahydrofuran-dicarbonsäureestern, epoxidierten Pflanzenölen und epoxidierten Fettsäuremonoalkylestern, Polyestern aus aliphatischen und/oder aromatischen Polycarbonsäuren mit wenigstens zweiwertigen Alkoholen.

Geeignete Phthalsäuredialkylester, die in vorteilhafter Weise mit den Verbindungen (I) und (II) gemischt werden können, weisen unabhängig voneinander 4 bis 13 C-Atome, bevorzugt 8 bis 13 C-Atome, in den Alkylketten auf. Ein geeigneter Phthalsäurealkylaralkylester ist beispielsweise Benzylbutylphthalat. Geeignete Terephthalsäuredialkylester weisen bevorzugt unabhängig voneinander jeweils 4 bis 13 C-Atome, insbesondere 7 bis 11 C-Atome, in den Alkylketten auf. Bevorzugte Terephthalsäuredialkylester sind beispielsweise Di-(n-butyl)-terephthalsäuredialkylester, Di-(2-ethylhexyl)-terephthalsäuredialkylester, Di-(isononyl)-terephthalsäuredialkylester oder Di-(2-propylheptyl)-terephthalsäuredialkylester. Die Trimellitsäuretrialkylester weisen bevorzugt unabhängig voneinander jeweils 4 bis 13 C-Atome, insbesondere 7 bis 11 C-Atome, in den Alkylketten auf. Geeignete Benzoesäurealkylester weisen bevorzugt unabhängig voneinander jeweils 7 bis 13 C-Atome, insbesondere 9 bis 13 C-Atome, in den Alkylketten auf. Geeignete Benzoesäurealkylester sind beispielsweise Isononylbenzoat, Isodecylbenzoat oder 2-Propylheptylbenzoat. Geeignete Dibenzoesäureester von Glycolen sind Diethylenglycoldibenzoat und Dibutylenglycoldibenzoat. Geeignete Ester von gesättigten Monocarbonsäuren sind beispielsweise Ester der Essigsäure, Buttersäure, Valeriansäure oder Milchsäure. Geeignete von den Verbindungen der Formel (I) verschiedenen Estern von gesättigten Dicarbonsäuren handelt es sich bevorzugt um Ester der Bernsteinsäure, Sebacinsäure, Äpfelsäure oder Weinsäure oder um Adipinsäuredialkylester mit 6 bis 13 C-Atomen in den Alkylketten. Geeignete von den Verbindungen der Formel (I) verschiedenen Estern von ungesättigten Dicarbonsäuren sind beispielsweise Ester der Maleinsäure und der Fumarsäure mit 6 bis 13 C-Atomen in den Alkylresten. Geeignete Alkylsulfonsäureester weisen vorzugsweise einen Alkylrest mit 8 bis 22 C-Atomen auf. Dazu zählen beispielsweise Phenyl- oder Cresylester der Pentadecylsulfonsäure. Geeignete Isosorbidester sind Isosorbiddiester, die bevorzugt mit C₈-C₁₃-Carbonsäuren verestert sind. Geeignete Phosphorsäureester sind Tri-2-ethylhexylphosphat, Trioctylphosphat, Triphenylphosphat, Isodecyldiphenylphosphat, Bis-(2-ethylhexyl)phenyl-phosphat und 2-Ethylhexyldiphenyl-phosphat. In den Citronensäuretriestern kann die OH-Gruppe in freier oder carboxylierter Form, bevorzugt acetyliert, vorliegen. Die Alkylreste der acetylierten Citronensäuretriester weisen bevorzugt unabhängig voneinander 4 bis 8 C-Atome, insbesondere 6 bis 8 C-Atome, auf. Geeignet sind Alkylpyrrolidonderivate mit Alkylresten von 4 bis 18 C-Atomen. Geeignete 2,5-Furandicarbonsäuredialkylester weisen unabhängig voneinander jeweils 7 bis 13 C-Atome, bevorzugt 8 bis 12 C-Atome, in den Alkylketten auf. Geeignete 2,5-Tetrahydrofurandicarbonsäuredialkylester weisen unabhängig voneinander jeweils 7 bis 13 C-Atome, bevorzugt 8 bis 12 C-Atome, in den Alkylketten auf. Ein geeignetes epoxidiertes Pflanzenöl ist beispielsweise epoxidiertes Sojaöl, z.B. erhältlich von der Firma Galata-Chemicals, Lampertheim, Germany. Epoxidierte Fettsäuremonoalkylester, beispielsweise erhältlich unter dem Handelsnamen reFlex™ der Firma PolyOne, USA, sind auch geeignet. Bei den Polyestern aus aliphatischen und aromatischen Polycarbonsäuren handelt es sich bevorzugt um Polyester der Adipinsäure mit mehrwertigen Alkoholen, insbesondere Dialkylenglycolpolyadipate mit 2 bis 6 Kohlenstoffatomen im Alkylenrest.

In allen zuvor genannten Fällen können die Alkylreste jeweils linear oder verzweigt und jeweils gleich oder verschieden sein. Auf die eingangs gemachten allgemeinen Ausführungen zu geeigneten und bevorzugten Alkylresten wird Bezug genommen.

Der Gehalt des wenigstens einen weiteren von den Verbindungen (I) und (II) verschiedenen Weichmachers in der erfindungsgemäß eingesetzten Weichmacher-Zusammensetzung beträgt üblicherweise 0 bis 50 Gew.-%, bevorzugt 0 bis 40 Gew.-%, besonders bevorzugt 0 bis 30 Gew.-% und insbesondere 0 bis 25 Gew.-%, bezogen auf die Gesamtmenge des wenigstens einen weiteren Weichmachers und der Verbindungen (I) und (II) in der Weichmacher-Zusammensetzung.

In einer bevorzugten Ausführungsform enthält die erfindungsgemäß eingesetzte Weichmacher-Zusammensetzung keinen weiteren von den Verbindungen (I) und (II) verschiedenen Weichmacher.

Bevorzugt beträgt der Anteil an Verbindungen der allgemeinen Formel (I) in den erfindungsgemäßen Formmassen 11-150 Gewichtsteile bezogen auf 100 Gewichtsteile Polymer (phr).

Besonders bevorzugt beträgt der Anteil an Verbindungen der allgemeinen Formel (I) in den erfindungsgemäßen Formmassen 13-100 phr, insbesondere 15-70 phr.

Bevorzugt beträgt der Anteil der Verbindungen der allgemeinen Formel (II) in den erfindungsgemäßen Formmassen 11-200 Gewichtsteile bezogen auf 100 Gewichtsteile Polymer (phr).

Besonders bevorzugt beträgt der Anteil an Verbindungen der allgemeinen Formel (II) in den erfindungsgemäßen Formmassen 13-150 phr, insbesondere 15-110 phr.

In der erfindungsgemäß eingesetzten Weichmacher-Zusammensetzung liegt das Gewichtsverhältnis zwischen Verbindungen der allgemeinen Formel (I) und Verbindungen der allgemeinen Formel (II) bevorzugt im Bereich von 1 : 20 bis 1 : 1, besonders bevorzugt im Bereich von 1 : 10 bis 1 : 1,5 und insbesondere im Bereich von 1 : 7 bis 1 : 2.

In einer bevorzugten Ausführungsform handelt es sich bei dem in der Formmasse enthaltenen Polymer um ein thermoplastisches Polymer.

Als thermoplastische Polymere kommen alle thermoplastisch verarbeitbaren Polymeren in Frage. Insbesondere sind diese thermoplastischen Polymere ausgewählt unter:
- Homo- oder Copolymere, die in einpolymerisierter Form wenigstens ein Monomer enthalten, das ausgewählt ist unter C₂-C₁₀ Monoolefinen, wie beispielsweise Ethylen oder Propylen, 1,3-Butadien, 2-Chlor-1,3-Butadien, Vinylalkohol und dessen C₂-C₁₀-Alkylestern, Vinylchlorid, Vinylidenchlorid, Vinylidenfluorid, Tetrafluorethylen, Glycidylacrylat, Glycidylmethacrylat, Acrylaten und Methacrylaten mit Alkoholkomponenten von verzweigten und unverzweigten C₁-C₁₀-Alkoholen, Vinylaromaten wie beispielsweise Styrol, (Meth)acrylnitril, α,β-ethylenisch ungesättigten Mono- und Dicarbonsäuren, und Maleinsäureanhydrid;
- Homo- und Copolymere von Vinylacetalen;
- Polyvinylestern;
- Polycarbonaten (PC);
- Polyestern, wie Polyalkylenterephthalaten, Polyhydroxyalkanoaten (PHA), Polybutylensuccinaten (PBS), Polybutylensuccinatadipaten (PBSA);
- Polyethern;
- Polyetherketonen;
- thermoplastischen Polyurethanen (TPU);
- Polysulfiden;
- Polysulfonen;
und Mischungen davon.

Zu nennen sind beispielsweise Polyacrylate mit gleichen oder verschiedenen Alkoholresten aus der Gruppe der C₄-C₈-Alkohole, besonders des Butanols, Hexanols, Octanols und 2-Ethylhexanols, Polymethylmethacrylat (PMMA), Methylmethacrylat-Butylacrylat-Copolymere, Acrylnitril-Butadien-Styrol-Copolymere (ABS), Ethylen-Propylen-Copolymere, Ethylen-Propylen-Dien-Copolymere (EPDM), Polystyrol (PS), Styrol-Acrylnitril-Copolymere (SAN), Acrylnitril-Styrol-Acrylat (ASA), Styrol-Butadien-Methylmethacrylat-Copolymere (SBMMA), Styrol-Maleinsäureanhydrid-Copolymere, Styrol-Methacrylsäure-Copolymere (SMA), Polyoxymethylen (POM), Polyvinylalkohol (PVAL), Polyvinylacetat (PVA), Polyvinylbutyral (PVB), Polycaprolacton (PCL), Polyhydroxybuttersäure (PHB), Polyhydroxyvaleriansäure (PHV), Polymilchsäure (PLA), Ethylcellulose (EC), Celluloseacetat (CA), Cellulosepropionat (CP) oder CelluloseAcetat/Butyrat (CAB).

Bevorzugt handelt es sich bei dem in der erfindungsgemäßen Formmasse enthaltenen wenigstens einem thermoplastischen Polymer um Polyvinylchlorid (PVC), Polyvinylbutyral (PVB), Homo- und Copolymere von Vinylacetat, Homo- und Copolymere von Styrol, Polyacrylate, thermoplastische Polyurethane (TPU) oder Polysulfide.

Je nachdem welches thermoplastische Polymer oder thermoplastische Polymergemisch in der Formmasse enthalten ist, werden unterschiedliche Mengen Weichmacher eingesetzt. In der Regel beträgt der Gesamtweichmachergehalt in der Formmasse 22 bis 300 phr (parts per hundred resin = Gewichtsteile pro hundert Gewichtsteile Polymer), bevorzugt 26 bis 200 phr, besonders bevorzugt 30 bis 100 phr.

Im Speziellen handelt es sich bei dem in der erfindungsgemäßen Formmasse enthaltenen wenigstens einem thermoplastischen Polymer um Polyvinylchlorid (PVC).

Polyvinylchlorid wird durch Homopolymerisation von Vinylchlorid erhalten. Das erfindungsgemäß verwendete Polyvinylchlorid (PVC) kann beispielsweise durch Suspensionspolymerisation, Mikrosuspensionspolymerisation, Emulsionspolymerisation oder Massenpolymerisation hergestellt werden. Die Herstellung von PVC durch Polymerisation von Vinylchlorid sowie Herstellung und Zusammensetzung von weichgemachtem PVC sind beispielsweise beschrieben in "Becker/Braun, Kunststoff-Handbuch, Band 2/1 : Polyvinylchlorid", 2. Auflage, Carl Hanser Verlag, München.

Der K-Wert, der die Molmasse des PVC charakterisiert und nach DIN 53726 bestimmt wird, liegt für das erfindungsgemäß weichgemachte PVC meist zwischen 57 und 90, bevorzugt zwischen 61 und 85, insbesondere zwischen 64 und 75.

Im Rahmen der Erfindung liegt der Gehalt an PVC der Gemische bei 20 bis 85 Gew.-%, bevorzugt bei 35 bis 80 Gew.-%und insbesondere bei 45 bis 80 Gew.-%.

Handelt es sich bei dem thermoplastischen Polymer in den erfindungsgemäßen Formmassen um Polyvinylchlorid beträgt der Gesamtweichmachergehalt in der Formmasse 22 bis 400 phr, bevorzugt 30 bis 200 phr und insbesondere 35 bis 150 phr. Dabei beträgt der Gehalt an Weichmachern der allgemeinen Formel (I) in der Formmasse bevorzugt mindestens 11 phr, besonders bevorzugt mindestens 13 phr und insbesondere mindestens 15 phr.

Ein weiterer Gegenstand der vorliegenden Erfindung betrifft Formmassen, enthaltend wenigstens ein Elastomer und wenigstens eine Weichmacher-Zusammensetzung wie zuvor definiert.

Bevorzugt handelt es sich bei dem in den erfindungsgemäßen Formmassen enthaltenen Elastomer um wenigstens einen natürlichen Kautschuk (NR), oder wenigstens einen auf synthetischem Wege hergestellten Kautschuk, oder Mischungen davon. Bevorzugte auf synthetischem Wege hergestellte Kautschuke sind beispielsweise Polyisopren-Kautschuk (IR), Styrol-Butadien-Kautschuk (SBR), Butadien-Kautschuk (BR), Nitril-Butadien-Kautschuk (NBR) oder Chloropren-Kautschuk (CR).

Bevorzugt sind Kautschuke oder Kautschuk-Mischungen, welche sich mit Schwefel vulkanisieren lassen.

Im Rahmen der Erfindung liegt der Gehalt (Gew.-%) an Elastomer in den Formmassen bei 20 bis 85%, bevorzugt 35 bis 80%und insbesondere bei 45 bis 80%.

Im Rahmen der Erfindung können die Formmassen, welche wenigstens ein Elastomer enthalten, zusätzlich zu den vorstehenden Bestandteilen andere geeignete Zusatzstoffe enthalten. Beispielsweise können verstärkende Füllstoffe, wie Ruß oder Siliciumdioxid, weitere Füllstoffe, ein Methylendonor, wie Hexamethylentetramin (HMT), ein Methylenakzeptor, wie mit Cardanol (aus Cashew-Nüssen) modifizierte Phenolharze, ein Vulkanisier- oder Vernetzungsmittel, ein Vulkanisier- oder Vernetzungsbeschleuniger, Aktivatoren, verschiedene Typen von Öl, Alterungsschutzmittel und andere verschiedene Zusatzstoffe, die beispielsweise in Reifen- und anderen Kautschukmassen eingemischt werden, enthalten sein.

Handelt es sich bei dem Polymer in den erfindungsgemäßen Formmassen um Kautschuke, beträgt der Gesamtweichmachergehalt in der Formmasse 22 bis 100 phr, bevorzugt 26 bis 80 phr, besonders bevorzugt 30 bis 60 phr. Dabei beträgt der Gehalt an Weichmachern der allgemeinen Formel (I) in der Formmasse bevorzugt mindestens 11 phr, besonders bevorzugt mindestens 13 phr und insbesondere mindestens 15 phr.

### Zusatzstoffe Formmasse

Im Rahmen der Erfindung können die Formmassen, enthaltend wenigstens ein thermoplastisches Polymer, andere geeignete Zusatzstoffe enthalten. Beispielsweise können Stabilisatoren, Gleitmittel, Füllstoffe, Pigmente, Flamminhibitoren, Lichtstabilisatoren, Treibmittel, polymere Verarbeitungshilfsmittel, Schlagzähverbesserer, optische Aufheller, Antistatika oder Biostabilisatoren enthalten sein.

Im Folgenden werden einige geeignete Zusatzstoffe näher beschrieben. Die aufgeführten Beispiele stellen jedoch keine Einschränkung der erfindungsgemäßen Formmassen dar, sondern dienen lediglich der Erläuterung. Alle Angaben zum Gehalt sind in Gew.-%-Angaben bezogen auf die gesamte Formmasse.

Als Stabilisatoren kommen alle üblichen PVC-Stabilisatoren in fester und flüssiger Form in Betracht, beispielsweise übliche Ca/Zn-, Ba/Zn-, Pb- oder Sn-Stabilisatoren sowie auch säurebindende Schichtsilikate.

Die erfindungsgemäßen Formmassen können einen Gehalt an Stabilisatoren von 0,05 bis 7 %, bevorzugt 0,1 bis 5 %, besonders bevorzugt von 0,2 bis 4 % und insbesondere von 0,5 bis 3 % aufweisen.

Gleitmittel vermindern die Haftung zwischen den zu verarbeitenden Kunststoffen und Metalloberflächen und sollten Reibungskräften beim Mischen, Plastifizieren und Verformen entgegenwirken.

Als Gleitmittel können die erfindungsgemäßen Formmassen alle die für die Verarbeitung von Kunststoffen üblichen Gleitmittel enthalten. In Betracht kommen beispielsweise Kohlenwasserstoffe, wie Öle, Paraffine und PE-Wachse, Fettalkohole mit 6 bis 20 Kohlenstoffatomen, Ketone, Carbonsäuren, wie Fettsäuren und Montansäure, oxidiertes PE-Wachs, Metallsalze von Carbonsäuren, Carbonsäureamide sowie Carbonsäureester, beispielsweise mit den Alkoholen Ethanol, Fettalkoholen, Glycerin, Ethandiol, Pentaerythrit und langkettigen Carbonsäuren als Säurekomponente.

Die erfindungsgemäßen Formmassen können einen Gehalt an Gleitmittel von 0,01 bis 10 %, bevorzugt 0,05 bis 5 %, besonders bevorzugt von 0,1 bis 3 % und insbesondere von 0,2 bis 2 % aufweisen.

Füllstoffe beeinflussen vor allem die Druck-, Zug-, und Biegefestigkeit sowie die Härte und Wärmeformbeständigkeit von weichgemachtem PVC in positiver Weise.

Im Rahmen der Erfindung können die Formmassen auch Füllstoffe, wie beispielsweise Ruß und andere anorganische Füllstoffe, wie natürliche Calciumcarbonate, beispielsweise Kreide, Kalkstein und Marmor, synthetische Calciumcarbonate, Dolomit, Silikate, Kieselsäure, Sand, Diatomeenerde, Aluminiumsilikate, wie Kaolin, Glimmer und Feldspat enthalten. Vorzugsweise werden als Füllstoffe Calciumcarbonate, Kreide, Dolomit, Kaolin, Silikate, Talkum oder Ruß eingesetzt.

Die erfindungsgemäßen Formmassen können einen Gehalt an Füllstoffen von 0,01 bis 80 %, bevorzugt 0,1 bis 60 %, besonders bevorzugt von 0,5 bis 50 % und insbesondere von 1 bis 40 % aufweisen.

Die erfindungsgemäßen Formmassen können auch Pigmente enthalten, um das erhaltene Produkt an unterschiedliche Einsatzmöglichkeiten anzupassen.

Im Rahmen der vorliegenden Erfindung können sowohl anorganische Pigmente als auch organische Pigmente eingesetzt werden. Als anorganische Pigmente können beispielsweise Kobalt-Pigmente, wie CoO/Al₂O₃, und Chrom-Pigmente, beispielsweise Cr₂O₃, verwendet werden. Als organische Pigmente kommen beispielsweise Monoazopigmente, kondensierte Azopigmente, Azomethinpigmente, Anthrachinonpigmente, Chinacridone, Phthalocyaninpigmente und Dioxazinpigmente in Betracht.

Die erfindungsgemäßen Formmassen können einen Gehalt an Pigmenten von 0,01 bis 10 %, bevorzugt 0,05 bis 5 %, besonders bevorzugt von 0,1 bis 3 % und insbesondere von 0,5 bis 2 % aufweisen.

Um die Entflammbarkeit zu vermindern und die Rauchentwicklung beim Verbrennen zu verringern, können die erfindungsgemäßen Formmassen auch Flamminhibitoren enthalten.

Als Flamminhibitoren können beispielsweise Antimontrioxid, Phosphatester, Chlorparaffin, Aluminiumhydroxid oder Borverbindungen verwendet werden.

Die erfindungsgemäßen Formmassen können einen Gehalt an Flamminhibitoren von 0,01 bis 10 %, bevorzugt 0,1 bis 8 %, besonders bevorzugt von 0,2 bis 5 % und insbesondere von 0,5 bis 2 % aufweisen.

Um aus den erfindungsgemäßen Formmassen hergestellte Artikel vor einer Schädigung im Oberflächenbereich durch den Einfluss von Licht zu schützen, können die Formmassen auch Lichtstabilisatoren, z.B. UV-Absorber, enthalten.

Als Lichtstabilisatoren können im Rahmen der vorliegenden Erfindung beispielsweise Hydroxybenzophenone, Hydroxyphenylbenzotriazole, Cyanoacrylate oder sogenannte "hindered aminine light stabilizers" (HALS), wie die Derivate von 2,2,6,6-Tetramethylpiperidin, eingesetzt werden.

Die erfindungsgemäßen Formmassen können einen Gehalt an Lichtstabilisatoren, z.B. UV-Absorber, von 0,01 bis 7 %, bevorzugt 0,1 bis 5 %, besonders bevorzugt von 0,2 bis 4 % und insbesondere von 0,5 bis 3 % aufweisen.

### Herstellung der Verbindungen der allgemeinen Formel (I)

Im Folgenden wird die Herstellung der in den erfindungsgemäßen Weichmacher-Zusammensetzungen enthaltenen Verbindungen der allgemeinen Formel (I) beschrieben.

### Veresterung

Die Herstellung der Ester-Verbindungen der allgemeinen Formel (I) kann durch Veresterung entsprechender aliphatischer Dicarbonsäuren mit den entsprechenden aliphatischen Alkoholen nach üblichen dem Fachmann bekannten Verfahren erfolgen. Dazu zählt die Umsetzung wenigstens einer Alkoholkomponente, ausgewählt aus den Alkoholen R¹-OH bzw. R²-OH, mit einer Dicarbonsäure der allgemeinen Formel HO-C(=O)- X-C(=O)-OH oder einem geeigneten Derivat davon. Geeignete Derivate sind z. B. die Säurehalogenide und Säureanhydride. Ein bevorzugtes Säurehalogenid ist das Säurechlorid. Als Veresterungskatalysatoren können die dafür üblichen Katalysatoren eingesetzt werden, z. B. Mineralsäuren, wie Schwefelsäure und Phosphorsäure; organische Sulfonsäuren, wie Methansulfonsäure und p-Toluolsulfonsäure; amphotere Katalysatoren, insbesondere Titan-, Zinn (IV)- oder Zirkoniumverbindungen, wie Tetraalkoxytitane, z. B. Tetrabutoxytitan, und Zinn (IV)-oxid. Das bei der Reaktion entstehende Wasser kann durch übliche Maßnahmen, z. B. destillativ, entfernt werden. Die WO 02/38531 beschreibt ein Verfahren zur Herstellung von Estern multibasischer Carbonsäuren, bei dem man a) in einer Reaktionszone ein im Wesentlichen aus der Säurekomponente oder einem Anhydrid davon und der Alkoholkomponente bestehendes Gemisch in Gegenwart eines Veresterungskatalysators zum Sieden erhitzt, b) die Alkohol und Wasser enthaltenden Dämpfe rektifikativ in eine alkoholreiche Fraktion und eine wasserreiche Fraktion auftrennt, c) die alkoholreiche Fraktion in die Reaktionszone zurückführt und die wasserreiche Fraktion aus dem Verfahren ausleitet. Das in der WO 02/38531 beschriebene Verfahren sowie die darin offenbarten Katalysatoren eignen sich ebenfalls für die Veresterung.

Der Veresterungskatalysator wird in einer wirksamen Menge eingesetzt, die üblicherweise im Bereich von 0,05 bis 10 Gew.-%, vorzugsweise 0,1 bis 5 Gew.-%, bezogen auf die Summe von Säurekomponente (oder Anhydrid) und Alkoholkomponente, liegt.

Weitere geeignete Verfahren zur Herstellung der Verbindungen der allgemeinen Formel (I) mittels Veresterung sind beispielsweise in der US 6,310,235, US 5,324,853, DE-A 2612355 oder DE-A 1945359 beschrieben. Auf die genannten Dokumente wird in vollem Umfang Bezug genommen.

In der Regel erfolgt die Veresterung der Dicarbonsäure HO-C(=O)-X-C(=O)-OH in Anwesenheit der oben beschriebenen Alkoholkomponenten R¹-OH bzw. R²-OH mittels einer organischen Säure oder Mineralsäure, insbesondere konzentrierter Schwefelsäure. Dabei wird die Alkoholkomponente vorteilhafterweise wenigstens in der doppelten stöchiometrischen Menge, bezogen auf die Menge an Dicarbonsäure HO-C(=O)-X-C(=O)-OH oder einem geeigneten Derivat davon in der Reaktionsmischung, eingesetzt.

Die Veresterung kann in der Regel bei Umgebungsdruck oder vermindertem oder erhöhtem Druck erfolgen. Bevorzugt wird die Veresterung bei Umgebungsdruck oder vermindertem Druck durchgeführt.

Die Veresterung kann in Abwesenheit eines zugesetzten Lösungsmittels oder in Gegenwart eines organischen Lösungsmittels durchgeführt werden.

Falls die Veresterung in Gegenwart eines Lösungsmittels durchgeführt wird, handelt es sich dabei vorzugsweise um ein unter den Reaktionsbedingungen inertes organisches Lösungsmittel. Dazu gehören beispielsweise aliphatische Kohlenwasserstoffe, halogenierte aliphatische Kohlenwasserstoffe, aromatische und substituierte aromatische Kohlenwasserstoffe oder Ether. Bevorzugt ist das Lösungsmittel ausgewählt unter Pentan, Hexan, Heptan, Ligroin, Petrolether, Cyclohexan, Dichlormethan, Trichlormethan, Tetrachlormethan, Benzol, Toluol, Xylol, Chlorbenzol, Dichlorbenzolen, Dibutylether, THF, Dioxan und Mischungen davon.

Die Veresterung wird üblicherweise in einem Temperaturbereich von 50 bis 250 °C durchgeführt.

Ist der Veresterungskatalysator ausgewählt unter organischen Säuren oder Mineralsäuren, wird die Veresterung üblicherweise in einem Temperaturbereich von 50 bis 160 °C durchgeführt.

Ist der Veresterungskatalysator ausgewählt unter amphoteren Katalysatoren, wird die Veresterung üblicherweise in einem Temperaturbereich von 100 bis 250 °C durchgeführt.

Die Veresterung kann in Abwesenheit oder in Gegenwart eines Inertgases erfolgen. Unter einem Inertgas wird in der Regel ein Gas verstanden, welches unter den gegebenen Reaktionsbedingungen keine Reaktionen mit den an der Reaktion beteiligten Edukten, Reagenzien, Lösungsmitteln oder den entstehenden Produkten eingeht.

### Umesterung:

Die Herstellung der Ester-Verbindungen der allgemeinen Formel (I) kann durch Umesterung von Estern, die von den Estern der allgemeinen Formel (I) verschieden sind, mit den entsprechenden aliphatischen Alkoholen nach üblichen dem Fachmann bekannten Verfahren erfolgen. Dazu zählt die Umsetzung der Di-(C₁-C₂)-Alkylester der Dicarbonsäuren HO-C(=O)-X-C(=O)-OH mit wenigstens einem Alkohol R¹-OH bzw. R²-OH oder Gemischen davon in Anwesenheit eines geeigneten Umesterungskatalysators.

Als Umesterungskatalysatoren kommen die üblichen gewöhnlich für Umesterungsreaktionen verwendeten Katalysatoren in Betracht, die meist auch bei Veresterungsreaktionen eingesetzt werden. Hierzu zählen z. B. Mineralsäuren, wie Schwefelsäure und Phosphorsäure; organische Sulfonsäuren, wie Methansulfonsäure und p-Toluolsulfonsäure; oder spezielle Metallkatalysatoren aus der Gruppe der Zinn (IV)-Katalysatoren, beispielsweise Dialkylzinndicarboxylate wie Dibutylzinndiacetat, Trialkylzinnalkoxide, Monoalkylzinnverbindungen wie Monobutylzinndioxid, Zinnsalze wie Zinnacetat oder Zinnoxide; aus der Gruppe der Titankatalysatoren, monomere und polymere Titanate und Titanchelate wie Tetraethylorthotitanat, Tetrapropylorthotitanat, Tetrabutylorthotitanat, Triethanolamintitanat; aus der Gruppe der Zirkonkatalysatoren, Zirkonate und Zirkonchelate wie Tetrapropylzirkonat, Tetrabutylzirkonat, Triethanolaminzirkonat; sowie Lithiumkatalysatoren wie Lithiumsalze, Lithiumalkoxide; oder Aluminium(III)-, Chrom(III)-, Eisen(III)-, Kobalt(II)-, Nickel(II) und Zink(II)-acetylacetonat.

Die Menge an eingesetztem Umesterungskatalysator liegt bei 0,05 bis 5 Gew.-%, bevorzugt bei 0,1 bis 1 Gew.-%. Das Reaktionsgemisch wird bevorzugt bis zum Siedepunkt des Reaktionsgemisches erhitzt, so dass die Reaktionstemperatur in Abhängigkeit von den Reaktanten zwischen 20 °C und 200 °C liegt.

Die Umesterung kann bei Umgebungsdruck oder vermindertem oder erhöhtem Druck erfolgen. Bevorzugt wird die Umesterung bei einem Druck von 0,001 bis 200 bar, besonders bevorzugt 0,01 bis 5 bar, durchgeführt. Der bei der Umesterung abgespaltene, niedriger siedende Alkohol wird zwecks Verschiebung des Gleichgewichts der Umesterungsreaktion bevorzugt kontinuierlich abdestilliert. Die hierzu benötigte Destillationskolonne steht in der Regel in direkter Verbindung mit dem Umesterungsreaktor, vorzugsweise ist sie direkt an diesem installiert. Im Falle der Verwendung mehrerer in Serie geschalteter Umesterungsreaktoren, kann jeder dieser Reaktoren mit einer Destillationskolonne ausgerüstet sein oder es kann, vorzugsweise aus den letzten Kesseln der Umesterungsreaktorkaskade, das abgedampfte Alkoholgemisch über eine oder mehrere Sammelleitungen einer Destillationskolonne zugeführt werden. Der bei dieser Destillation zurückgewonnene höhersiedende Alkohol wird vorzugsweise wieder in die Umesterung zurückgeführt.

Im Falle der Verwendung eines amphoteren Katalysators gelingt dessen Abtrennung im Allgemeinen durch Hydrolyse und anschließende Abtrennung des gebildeten Metalloxids, z. B. durch Filtration. Bevorzugt wird nach erfolgter Reaktion der Katalysator mittels Waschen mit Wasser hydrolysiert und das ausgefallene Metalloxid abfiltriert. Gewünschtenfalls kann das Filtrat einer weiteren Aufarbeitung zur Isolierung und/oder Reinigung des Produkts unterzogen werden. Bevorzugt wird das Produkt destillativ abgetrennt.

Die Umesterung der Di-(C₁-C₂)-Alkylester der Dicarbonsäuren HO-C(=O)-X-C(=O)-OH mit wenigstens einem Alkohol R¹-OH bzw. R²-OH oder Gemischen davon erfolgt bevorzugt in Gegenwart wenigstens eines Titan (IV)-Alkoholats. Bevorzugte Titan (IV)-Alkoholate sind Tetrapropoxytitan, Tetrabutoxytitan oder Gemische davon. Bevorzugt wird die Alkoholkomponente wenigstens in der doppelten stöchiometrischen Menge, bezogen auf die eingesetzten Di-(C₁-C₂-Alkyl)-Ester eingesetzt.

Die Umesterung kann in Abwesenheit oder in Gegenwart eines zugesetzten organischen Lösungsmittels durchgeführt werden. Bevorzugt wird die Umesterung in Gegenwart eines inerten organischen Lösungsmittels durchgeführt. Geeignete organische Lösungsmittel sind die zuvor für die Veresterung genannten. Dazu zählen speziell Toluol und THF.

Die Temperatur bei der Umesterung liegt vorzugsweise in einem Bereich von 50 bis 200 °C.

Die Umesterung kann in Abwesenheit oder in Gegenwart eines Inertgases erfolgen. Unter einem Inertgas wird in der Regel ein Gas verstanden, welches unter den gegebenen Reaktionsbedingungen keine Reaktionen mit den an der Reaktion beteiligten Edukten, Reagenzien, Lösungsmitteln oder den entstehenden Produkten eingeht. Bevorzugt wird die Umesterung ohne Hinzufügen eines Inertgases durchgeführt.

Die zur Herstellung der Verbindungen der allgemeinen Formel (I) eingesetzten aliphatischen Dicarbonsäuren und aliphatischen Alkohole können entweder kommerziell erworben oder nach literaturbekannten Synthesewegen hergestellt werden.

Die erfindungsgemäße Verbindung Di-n-butyladipat ist auch kommerziell erhältlich, beispielsweise unter dem Markennamen Cetiol® B von BASF SE, Ludwigshafen, und unter dem Markennamen Adimoll® DB von Lanxess, Leverkusen.

### Verbindungen der allgemeinen Formel (II)

Die Verbindungen der allgemeinen Formel (II) können entweder kommerziell erworben oder nach im Stand der Technik bekannten Verfahren hergestellt werden.

In der Regel werden die 1,2-Cyclohexandicarbonsäureester meist durch Kernhydrierung der entsprechenden Phthalsäureester erhalten. Die Kernhydrierung kann nach dem in der WO 99/32427 beschriebenen Verfahren erfolgen. Ein besonders geeignetes Kernhydrierungsverfahren beschreibt beispielsweise auch die WO 2011082991 A2.

Des Weiteren können 1,2-Cyclohexandicarbonsäureester durch Veresterung von 1,2-Cyclohexandicarbonsäure oder geeigneten Derivaten davon mit den entsprechenden Alkoholen erhalten werden. Die Veresterung kann nach üblichen dem Fachmann bekannten Verfahren erfolgen.

Den Verfahren zur Herstellung der Verbindungen der allgemeinen Formel (II) ist gemein, dass ausgehend von Phthalsäure, 1,2-Cyclohexandicarbonsäure oder geeigneten Derivaten davon, eine Veresterung bzw. eine Umesterung durchgeführt wird, wobei die entsprechenden C₇-C₁₂-Alkanolen als Edukte eingesetzt werden. Bei diesen Alkoholen handelt es sich in der Regel nicht um reine Substanzen, sondern um Isomerengemische, deren Zusammensetzung und Reinheitsgrad von dem jeweiligen Verfahren abhängt, mit denen diese dargestellt werden.

Bevorzugte C₇-C₁₂-Alkanole, die zur Herstellung der in der Weichmacher-Zusammensetzung enthaltenen Verbindungen (II) eingesetzt werden, können geradkettig oder verzweigt sein oder aus Gemischen aus geradkettigen und verzweigten C₇-C₁₂-Alkanolen bestehen. Dazu zählen n-Heptanol, Isoheptanol, n-Octanol, Isooctanol, 2-Ethylhexanol, n-Nonanol, Isononanol, Isodecanol, 2-Propylheptanol, n-Undecanol, Isoundecanol, n-Dodecanol oder Isododecanol. Besonders bevorzugte C₇-C₁₂-Alkanole sind 2-Ethylhexanol, Isononanol und 2-Propylheptanol, insbesondere Isononanol.

### Heptanol

Die zur Herstellung der Verbindungen der allgemeinen Formel (II) eingesetzten Heptanole können geradkettig oder verzweigt sein oder aus Gemischen aus geradkettigen und verzweigten Heptanolen bestehen. Bevorzugt werden Gemische aus verzweigten Heptanolen, auch als Isoheptanol bezeichnet, verwendet, die durch die Rhodium- oder vorzugsweise Kobalt-katalysierte Hydroformylierung von Dimerpropen, erhältlich z. B. nach dem Dimersol®-Verfahren, und anschließende Hydrierung der erhaltenen Isoheptanale zu einem Isoheptanol-Gemisch hergestellt werden. Entsprechend seiner Herstellung besteht das so gewonnene Isoheptanol-Gemisch aus mehreren Isomeren. Im Wesentlichen geradkettige Heptanole können durch die Rhodium- oder vorzugsweise Kobalt-katalysierte Hydroformylierung von 1-Hexen und anschließende Hydrierung des erhaltenen n-Heptanals zu n-Heptanol erhalten werden. Die Hydroformylierung von 1-Hexen bzw. Dimerpropen kann nach an sich bekannten Verfahren erfolgen: Bei der Hydroformylierung mit homogen im Reaktionsmedium gelösten Rhodiumkatalysatoren können sowohl unkomplexierte Rhodiumcarbonyle, die in situ unter den Bedingungen der Hydroformylierungsreaktion im Hydroformylierungsreaktionsgemisch unter Einwirkung von Synthesegas z. B. aus Rhodiumsalzen gebildet werden, als auch komplexe Rhodiumcarbonylverbindungen, insbesondere Komplexe mit organischen Phosphinen, wie Triphenylphosphin, oder Organophosphiten, vorzugsweise chelatisierenden Biphosphiten, wie z. B. in US-A 5288918 beschrieben, als Katalysator verwendet werden. Bei der Kobalt-katalysierten Hydroformylierung dieser Olefine werden im Allgemeinen homogen im Reaktionsgemisch lösliche Kobaltcarbonyl-Verbindungen eingesetzt, die sich unter den Bedingungen der Hydroformylierungsreaktion unter Einwirkung von Synthesegas in situ aus Kobaltsalzen bilden. Wird die Kobalt-katalysierte Hydroformylierung in Gegenwart von Trialkyl- oder Triarylphosphinen ausgeführt, bilden sich als Hydroformylierungsprodukt direkt die gewünschten Heptanole, so dass keine weitere Hydrierung der Aldehydfunktion mehr benötigt wird.

Zur Kobalt-katalysierten Hydroformylierung des 1-Hexens bzw. der Hexenisomerengemische eignen sich beispielsweise die in Falbe, New Syntheses with Carbon Monoxide, Springer, Berlin, 1980 auf den Seiten 162 - 168, erläuterten industriell etablierten Verfahren, wie das Ruhrchemie-Verfahren, das BASF-Verfahren, das Kuhlmann-Verfahren oder das Shell-Verfahren. Während das Ruhrchemie-, BASF- und das Kuhlmann-Verfahren mit nicht ligandmodifizierten Kobaltcarbonyl-Verbindungen als Katalysatoren arbeiten und dabei Hexanal-Gemische erhalten, verwendet das Shell-Verfahren (DE-A 1593368) Phosphin- oder Phosphit-Ligand-modifizierte Kobaltcarbonyl-Verbindungen als Katalysator, die aufgrund ihrer zusätzlichen hohen Hydrieraktivität direkt zu den Hexanolgemischen führen. Vorteilhafte Ausgestaltungen zur Durchführung der Hydroformylierung mit nicht-ligandmodifizierten Kobaltcarbonylkomplexen werden in DE-A 2139630, DE-A 2244373, DE-A 2404855 und WO 01014297 detailliert beschrieben.

Zur Rhodium-katalysierten Hydroformylierung des 1-Hexens bzw. der Hexenisomerengemische kann das industriell etablierte Rhodium-Niederdruck-Hydroformylierungsverfahren mit Triphenylphosphinligand-modifizierten Rhodiumcarbonylverbindungen angewandt werden, wie es Gegenstand von US-A 4148830 ist. Vorteilhaft können zur Rhodium-katalysierten Hydroformylierung langkettiger Olefine, wie der nach den vorstehend genannten Verfahren erhaltenen Hexenisomerengemische, nicht-ligand-modifizierte Rhodiumcarbonylverbindungen als Katalysator dienen, wobei im Unterschied zum Niederdruckverfahren ein höherer Druck von 80 bis 400 bar einzustellen ist. Die Durchführung solcher Rhodium-Hochdruck-Hydroformylierungsverfahren wird in z. B. EP-A 695734, EP-B 880494 und EP-B 1047655 beschrieben.

Die nach Hydroformylierung der Hexen-Isomerengemische erhaltenen Isoheptanalgemische werden auf an sich herkömmliche Weise zu Isoheptanolgemischen katalytisch hydriert. Bevorzugt werden hierzu heterogene Katalysatoren verwendet, die als katalytisch aktive Komponente Metalle und/oder Metalloxide der VI. bis VIII. sowie der I. Nebengruppe des Periodensystems der Elemente, insbesondere Chrom, Molybdän, Mangan, Rhenium, Eisen, Kobalt, Nickel und/oder Kupfer, gegebenenfalls abgeschieden auf einem Trägermaterial wie Al₂O₃, SiO₂ und/oder TiO₂, enthalten. Solche Katalysatoren werden z. B. in DE-A 3228881, DE-A 2628987 und DE-A 2445303 beschrieben.

Besonders vorteilhaft wird die Hydrierung der Isoheptanale mit einem Überschuss an Wasserstoff von 1,5 bis 20 % über der stöchiometrisch zur Hydrierung der Isoheptanale benötigten Wasserstoffmenge, bei Temperaturen von 50 bis 200 °C und bei einem Wasserstoffdruck von 25 bis 350 bar durchgeführt und zur Vermeidung von Nebenreaktionen dem Hydrierzulauf gemäß DE-A 2628987 eine geringe Menge Wasser, vorteilhaft in Form einer wässrigen Lösung eines Alkalimetallhydroxids oder -carbonats entsprechend der Lehre von WO 01087809 zugefügt.

### Octanol

2-Ethylhexanol, das für lange Jahre der in den größten Mengen produzierte Weichmacheralkohol war, kann über die Aldolkondensation von n-Butyraldehyd zu 2-Ethylhexenal und dessen anschließende Hydrierung zu 2-Ethylhexanol gewonnen werden (s. Ullmann's Encyclopedia of Industrial Chemistry; 5. Auflage, Bd. A 10, S. 137 - 140, VCH Verlagsgesellschaft GmbH, Weinheim 1987).

Im Wesentlichen geradkettige Octanole können durch die Rhodium- oder vorzugsweise Kobalt-katalysierte Hydroformylierung von 1-Hepten und anschließende Hydrierung des erhaltenen n-Octanals zu n-Octanol erhalten werden. Das dazu benötigte 1-Hepten kann aus der Fischer-Tropsch-Synthese von Kohlenwasserstoffen gewonnen werden.

Bei dem Alkohol Isooctanol handelt es sich im Unterschied zu 2-Ethylhexanol oder n-Octanol, bedingt durch seine Herstellungsweise, nicht um eine einheitliche chemische Verbindung, sondern um ein Isomerengemisch aus unterschiedlich verzweigten C₈-Alkoholen, beispielsweise aus 2,3-Dimethyl-1-hexanol, 3,5-Dimethyl-1-hexanol, 4,5-Dimethyl-1-hexanol, 3-Methyl-1-heptanol und 5-Methyl-1-heptanol, die je nach den angewandten Herstellungsbedingungen und -verfahren in unterschiedlichen Mengenverhältnissen im Isooctanol vorliegen können. Isooctanol wird üblicherweise durch die Codimerisierung von Propen mit Butenen, vorzugsweise n-Butenen, und anschließende Hydroformylierung des dabei erhaltenen Gemisches aus Heptenisomeren hergestellt. Das bei der Hydroformylierung erhaltene Octanal-Isomerengemisch kann anschließend auf an sich herkömmliche Weise zum Isooctanol hydriert werden.

Die Codimerisierung von Propen mit Butenen zu isomeren Heptenen kann vorteilhaft mit Hilfe des homogenkatalysierten Dimersol®-Verfahrens (Chauvin et al; Chem. Ind.; Mai 1974, S. 375 - 378) erfolgen, bei dem als Katalysator ein löslicher Nickel-Phosphin-Komplex in Gegenwart einer Ethylaluminiumchlor-Verbindung, beispielsweise Ethylaluminiumdichlorid, dient. Als Phosphin-Liganden für den NickelkomplexKatalysator können z. B. Tributylphosphin, Tri-isopropylphosphin, Tricyclohexylphosphin und/oder Tribenzylphosphin eingesetzt werden. Die Umsetzung findet bei Temperaturen von 0 bis 80 °C statt, wobei vorteilhaft ein Druck eingestellt wird, bei dem die Olefine im flüssigen Reaktionsgemisch gelöst vorliegen (Cornils; Hermann: Applied Homogeneous Catalysis with Organometallic Compounds; 2. Auflage; Bd. 1; S. 254 - 259, Wiley-VCH, Weinheim 2002).

Alternativ zum mit homogen im Reaktionsmedium gelösten Nickelkatalysatoren betriebenen Dimersol®-Verfahren kann die Codimerisierung von Propen mit Butenen auch mit auf einem Träger abgeschiedenen, heterogenen NiO-Katalysatoren durchgeführt werden, wobei ähnliche Hepten-Isomerenverteilungen erhalten werden wie beim homogen katalysierten Verfahren. Solche Katalysatoren werden beispielsweise im so genannten Octol®-Verfahren (Hydrocarbon Processing, Februar 1986, S. 31 - 33) verwendet, ein gut geeigneter spezifischer Nickel-Heterogenkatalysator zur Olefindimerisierung bzw. Codimerisierung ist z. B. in WO 9514647 offenbart.

Anstelle von Katalysatoren auf Basis von Nickel können auch Brønsted-acide heterogene Katalysatoren zur Codimerisierung von Propen mit Butenen verwendet werden, wobei in der Regel höher verzweigte Heptene als in den Nickel-katalysierten Verfahren erhalten werden. Beispiele von hierfür geeigneten Katalysatoren sind feste Phosphorsäure-Katalysatoren z. B. mit Phosphorsäure imprägnierte Kieselgur oder Diatomeenerde, wie sie vom PolyGas®-Verfahren zur Olefindi- bzw. Oligomerisierung benutzt werden (Chitnis et al; Hydrocarbon Engineering 10, Nr. 6 - Juni 2005). Zur Codimerisierung von Propen und Butenen zu Heptenen sehr gut geeignete Brønsted-acide Katalysatoren sind Zeolithe, deren sich das auf Basis des PolyGas®-Verfahrens weiterentwickelte EMOGAS®-Verfahren bedient.

Das 1-Hepten und die Hepten-Isomerengemische werden nach den vorstehend in Zusammenhang mit der Herstellung von n-Heptanal und Heptanal-Isomerengemische erläuterten bekannten Verfahren mittels Rhodium- oder Kobalt-katalysierter Hydroformylierung, vorzugsweise Kobalt-katalysierter Hydroformylierung, in n-Octanal bzw. Octanal-Isomerengemische überführt. Diese werden anschließend z. B. mittels eines der vorstehend in Zusammenhang mit der n-Heptanol- und Isoheptanol-Herstellung genannten Katalysatoren zu den entsprechenden Octanolen hydriert.

### Nonanol

Im Wesentlichen geradkettiges Nonanol kann durch die rhodium- oder vorzugsweise kobaltkatalysierte Hydroformylierung von 1-Octen und nachfolgende Hydrierung des dabei erhaltenen n-Nonanals erhalten werden. Das Ausgangsolefin 1-Octen kann beispielsweise über eine Ethylenoligomerisierung mittels einem homogen im Reaktionsmedium - 1,4-Butandiol - löslichen Nickelkomplexkatalysator mit z. B. Diphenylphosphinoessigsäure oder 2-Diphenylphosphinobenzoesäure als Liganden erhalten werden. Dieses Verfahren ist auch unter der Bezeichnung Shell Higher Olefins Process oder SHOP-Verfahren bekannt (s. Weisermel, Arpe: Industrielle Organische Chemie; 5. Auflage; S. 96; Wiley-VCH, Weinheim 1998).

Bei Isononanol, welches zur Synthese der in der erfindungsgemäßen Weichmacher-Zusammensetzung enthaltenen Diisononylester der allgemeinen Formel (II) eingesetzt wird, handelt es sich nicht um eine einheitliche chemische Verbindung, sondern um ein Gemisch aus unterschiedlich verzweigten isomeren C₉-Alkoholen, die je nach der Art ihrer Herstellung, insbesondere auch der verwendeten Ausgangsstoffe, unterschiedliche Verzweigungsgrade haben können. Im Allgemeinen werden die Isononanole durch Dimerisierung von Butenen zu Isooctengemischen, anschließende Hydroformylierung der Isooctengemische und Hydrierung der dabei erhaltenen Isononanal-Gemische zu Isononanolgemischen hergestellt, wie in Ullmann's Encyclopedia of Industrial Chemistry, 5. Auflage, Bd. A1, S. 291 - 292, VCH Verlagsgesellschaft GmbH, Weinheim 1995, erläutert.

Als Ausgangsmaterial zur Herstellung der Isononanole können sowohl Isobuten, cis- und trans-2-Buten als auch 1-Buten oder Gemische dieser Butenisomere verwendet werden. Bei der vorwiegend mittels flüssiger, z. B. Schwefel- oder Phosphorsäure, oder fester, z. B. auf Kieselgur, SiO₂ oder Al₂O₃ als Trägermaterial aufgebrachter Phosphorsäure oder Zeolithe oder Brønsted-Säuren katalysierten Dimerisierung von reinem Isobuten, wird überwiegend das stark verzweigte 2,4,4-Trimethylpenten, auch als Diisobutylen bezeichnet, erhalten, das nach Hydroformylierung und Hydrierung des Aldehyds hochverzweigte Isononanole liefert.

Bevorzugt sind Isononanole mit einem geringeren Verzweigungsgrad. Solche gering verzweigten Isononanol-Gemische werden aus den linearen Butenen 1-Buten, cis- und/oder trans-2-Buten, die gegebenenfalls noch geringere Mengen an Isobuten enthalten können, über den vorstehend beschriebenen Weg der Butendimerisierung, Hydroformylierung des Isooctens und Hydrierung der erhaltenen Isononanal-Gemische hergestellt. Ein bevorzugter Rohstoff ist das so genannte Raffinat II, das aus dem C₄-Schnitt eines Crackers, beispielsweise eines Steamcrackers, das nach Eliminierung von Allenen, Acetylenen und Dienen, insbesondere 1,3-Butadien, durch dessen Partialhydrierung zu linearen Butenen oder dessen Abtrennung durch Extraktivdestillation, beispielsweise mittels N-Methylpyrrolidon, und nachfolgender Brønsted-Säure katalysierter Entfernung des darin enthaltenen Isobutens durch dessen Umsetzung mit Methanol oder Isobutanol nach großtechnisch etablierten Verfahren unter Bildung des Kraftstoffadditivs Methyl-tert.-Butylether (MTBE) oder des zur Gewinnung von Rein-Isobuten dienenden Isobutyl-tert.-Butylether, gewonnen wird.

Raffinat II enthält neben 1-Buten und cis- und trans-2-Buten noch n- und iso-Butan und Restmengen von bis zu 5 Gew.-% an Isobuten.

Die Dimerisierung der linearen Butene oder des im Raffinat II enthaltenen Butengemischs kann mittels der gängigen, großtechnisch praktizierten Verfahren, wie sie vorstehend in Zusammenhang mit der Erzeugung von Isoheptengemischen erläutert wurden, beispielsweise mittels heterogener, Brønsted-acider Katalysatoren, wie sie im PolyGas®- oder EMOGASO-Verfahren eingesetzt werden, mittels des Dimersol®-Verfahrens unter Verwendung homogen im Reaktionsmedium gelöster Nickel-Komplex-Katalysatoren oder mittels heterogener, Nickel(II)oxid-haltiger Katalysatoren nach dem Octol®-Verfahren oder dem Verfahren gemäß WO 9514647, durchgeführt werden. Die dabei erhaltenen Isoocten-Gemische werden nach den vorstehend in Zusammenhang mit der Herstellung von Heptanal-Isomerengemische erläuterten bekannten Verfahren mittels Rhodium- oder Kobalt-katalysierter Hydroformylierung, vorzugsweise Kobalt-katalysierter Hydroformylierung, in Isononanal-Gemische überführt. Diese werden anschließend z. B. mittels einem der vorstehend in Zusammenhang mit der Isoheptanol-Herstellung genannten Katalysatoren zu den geeigneten Isononanolgemischen hydriert.

Die so hergestellten Isononanol-Isomerengemische können über ihren Isoindex charakterisiert werden, der aus dem Verzweigungsgrad der einzelnen isomeren Isononanolkomponenten im Isononanolgemisch multipliziert mit deren prozentualen Anteil im Isononanolgemisch errechnet werden kann. So tragen z. B. n-Nonanol mit dem Wert 0, Methyloctanole (eine Verzweigung) mit dem Wert 1 und Dimethylheptanole (zwei Verzweigungen) mit dem Wert 2 zum Isoindex eines Isononanolgemisches bei. Je höher die Linearität, desto niedriger ist der Isoindex des betreffenden Isononanolgemisches. Dementsprechend kann der Isoindex eines Isononanolgemisches durch gaschromatographische Auftrennung des Isononanolgemisches in seine einzelnen Isomere und damit einhergehender Quantifizierung von deren prozentualen Mengenanteil im Isononanolgemisch, bestimmt nach Standardmethoden der gaschromatographischen Analyse, ermittelt werden. Zwecks Erhöhung der Flüchtigkeit und Verbesserung der gaschromatographischen Auftrennung der isomeren Nonanole werden diese zweckmäßigerweise vor der gaschromatographischen Analyse mittels Standardmethoden, beispielsweise durch Umsetzung mit N-Methyl-N-trimethylsilyltrifluoracetamid, trimethylsilyliert. Um eine möglichst gute Trennung der einzelnen Komponenten bei der gaschromatographischen Analyse zu erzielen, werden vorzugsweise Kapillarsäulen mit Polydimethylsiloxan als stationärer Phase verwendet. Solche Kapillarsäulen sind im Handel erhältlich, und es bedarf lediglich einiger weniger Routineversuche des Fachmanns, um aus dem vielfältigen Angebot des Handels ein optimal für diese Trennaufgabe geeignetes Fabrikat auszuwählen.

Die in der erfindungsgemäßen Weichmacher-Zusammensetzung verwendeten Diisononylester der allgemeinen Formel (II) sind im Allgemeinen mit Isononanolen mit einem Isoindex von 0,8 bis 2, vorzugsweise von 1,0 bis 1,8 und besonders bevorzugt von 1,1 bis 1,5 verestert, die nach den vorstehend genannten Verfahren hergestellt werden können.

Lediglich beispielhaft werden im Folgenden mögliche Zusammensetzungen von Isononanolgemischen angegeben, wie sie zur Herstellung der erfindungsgemäß eingesetzten Verbindungen der allgemeinen Formel (II) verwendet werden können, wobei anzumerken ist, dass die Anteile der im Einzelnen aufgeführten Isomeren im Isononanolgemisch abhängig von der Zusammensetzung des Ausgangsmaterials, beispielsweise Raffinat II, dessen Zusammensetzung an Butenen produktionsbedingt variieren kann und von Schwankungen in den angewandten Produktionsbedingungen, beispielsweise dem Alter der benutzten Katalysatoren und daran anzupassenden Temperatur- und Druckbedingungen, variieren können.

Beispielsweise kann ein Isononanolgemisch, das durch Kobalt-katalysierte Hydroformylierung und anschließende Hydrierung aus einem unter Verwendung von Raffinat II als Rohstoff mittels des Katalysators und Verfahrens gemäß WO 9514647 erzeugten Isooctengemisches hergestellt wurde, folgende Zusammensetzung haben:
- 1,73 bis 3,73 Gew.-%, bevorzugt 1,93 bis 3,53 Gew.-%, besonders bevorzugt 2,23 bis 3,23 Gew.-% 3-Ethyl-6-methyl-hexanol;
- 0,38 bis 1,38 Gew.-%, bevorzugt 0,48 bis 1,28 Gew.-%, besonders bevorzugt 0,58 bis 1,18 Gew.-% 2,6-Dimethylheptanol;
- 2,78 bis 4,78 Gew.-%, bevorzugt 2,98 bis 4,58 Gew.-%, besonders bevorzugt 3,28 bis 4,28 Gew.-% 3,5-Dimethylheptanol;
- 6,30 bis 16,30 Gew.-%, bevorzugt 7,30 bis 15,30 Gew.-%, besonders bevorzugt 8,30 bis 14,30 Gew.-% 3,6-Dimethylheptanol;
- 5,74 bis 11,74 Gew.-%, bevorzugt 6,24 bis 11,24 Gew.-%, besonders bevorzugt 6,74 bis 10,74 Gew.-% 4,6-Dimethylheptanol;
- 1,64 bis 3,64 Gew.-%, bevorzugt 1,84 bis 3,44 Gew.-%, besonders bevorzugt 2,14 bis 3,14 Gew.-% 3,4,5-Trimethylhexanol;
- 1,47 bis 5,47 Gew.-%, bevorzugt 1,97 bis 4,97 Gew.-%, besonders bevorzugt 2,47 bis 4,47 Gew.-% 3,4,5-Trimethylhexanol, 3-Methyl-4-ethylhexanol und 3-Ethyl-4-methylhexanol;
- 4,00 bis 10,00 Gew.-%, bevorzugt 4,50 bis 9,50 Gew.-%, besonders bevorzugt 5,00 bis 9,00 Gew.-% 3,4-Dimethylheptanol;
- 0,99 bis 2,99 Gew.-%, bevorzugt 1,19 bis 2,79 Gew.-%, besonders bevorzugt 1,49 bis 2,49 Gew.-% 4-Ethyl-5-methylhexanol und 3-Ethylheptanol;
- 2,45 bis 8,45 Gew.-%, bevorzugt 2,95 bis 7,95 Gew.-%, besonders bevorzugt 3,45 bis 7,45 Gew.-% 4,5-Dimethylheptanol und 3-Methyloctanol;
- 1,21 bis 5,21 Gew.-%, bevorzugt 1,71 bis 4,71 Gew.-%, besonders bevorzugt 2,21 bis 4,21 Gew.-% 4,5-Dimethylheptanol;
- 1,55 bis 5,55 Gew.-%, bevorzugt 2,05 bis 5,05 Gew.-%, besonders bevorzugt 2,55 bis 4,55 Gew.-% 5,6-Dimethylheptanol;
- 1,63 bis 3,63 Gew.-%, bevorzugt 1,83 bis 3,43 Gew.-%, besonders bevorzugt 2,13 bis 3,13 Gew.-% 4-Methyloctanol;
- 0,98 bis 2,98 Gew.-%, bevorzugt 1,18 bis 2,78 Gew.-%, besonders bevorzugt 1,48 bis 2,48 Gew.-% 5-Methyloctanol;
- 0,70 bis 2,70 Gew.-%, bevorzugt 0,90 bis 2,50 Gew.-%, besonders bevorzugt 1,20 bis 2,20 Gew.-% 3,6,6-Trimethylhexanol;
- 1,96 bis 3,96 Gew.-%, bevorzugt 2,16 bis 3,76 Gew.-%, besonders bevorzugt 2,46 bis 3,46 Gew.-% 7-Methyloctanol;
- 1,24 bis 3,24 Gew.-%, bevorzugt 1,44 bis 3,04 Gew.-%, besonders bevorzugt 1,74 bis 2,74 Gew.-% 6-Methyloctanol;
- 0,1 bis 3 Gew.-%, bevorzugt 0,2 bis 2 Gew.-%, besonders bevorzugt 0,3 bis 1 Gew.-% n-Nonanol;
- 25 bis 35 Gew.-%, bevorzugt 28 bis 33 Gew.-%, besonders bevorzugt 29 bis 32 Gew.-% sonstige Alkohole mit 9 und 10 Kohlenstoffatomen; mit der Maßgabe, dass die Gesamtsumme der genannten Komponenten 100 Gew.-% ergibt.

Entsprechend den vorstehenden Ausführungen kann ein Isononanolgemisch, das durch Kobalt-katalysierte Hydroformylierung und anschließende Hydrierung unter Verwendung eines Ethylen-haltigen Butengemisches als Rohstoff mittels des PolyGas®- oder EMOGASO-Verfahrens erzeugten Isooctengemisches hergestellt wurde, im Bereich der folgenden Zusammensetzungen, abhängig von der Rohstoffzusammensetzung und Schwankungen der angewandten Reaktionsbedingungen variieren:
- 6,0 bis 16,0 Gew.-%, bevorzugt 7,0 bis 15,0 Gew.-%, besonders bevorzugt 8,0 bis 14,0 Gew.-% n-Nonanol;
- 12,8 bis 28,8 Gew.-%, bevorzugt 14,8 bis 26,8 Gew.-%, besonders bevorzugt 15,8 bis 25,8 Gew.-% 6-Methyloctanol;
- 12,5 bis 28,8 Gew.-%, bevorzugt 14,5 bis 26,5 Gew.-%, besonders bevorzugt 15,5 bis 25,5 Gew.-% 4-Methyloctanol;
- 3,3 bis 7,3 Gew.-%, bevorzugt 3,8 bis 6,8 Gew.-%, besonders bevorzugt 4,3 bis 6,3 Gew.-% 2-Methyloctanol;
- 5,7 bis 11,7 Gew.-%, bevorzugt 6,3 bis 11,3 Gew.-%, besonders bevorzugt 6,7 bis 10,7 Gew.-% 3-Ethylheptanol;
- 1,9 bis 3,9 Gew.-%, bevorzugt 2,1 bis 3,7 Gew.-%, besonders bevorzugt 2,4 bis 3,4 Gew.-% 2-Ethylheptanol;
- 1,7 bis 3,7 Gew.-%, bevorzugt 1,9 bis 3,5 Gew.-%, besonders bevorzugt 2,2 bis 3,2 Gew.-% 2-Propylhexanol;
- 3,2 bis 9,2 Gew.-%, bevorzugt 3,7 bis 8,7 Gew.-%, besonders bevorzugt 4,2 bis 8,2 Gew.-% 3,5-Dimethylheptanol;
- 6,0 bis 16,0 Gew.-%, bevorzugt 7,0 bis 15,0 Gew.-%, besonders bevorzugt 8,0 bis 14,0 Gew.-% 2,5-Dimethylheptanol;
- 1,8 bis 3,8 Gew.-%, bevorzugt 2,0 bis 3,6 Gew.-%, besonders bevorzugt 2,3 bis 3,3 Gew.-% 2,3-Dimethylheptanol;
- 0,6 bis 2,6 Gew.-%, bevorzugt 0,8 bis 2,4 Gew.-%, besonders bevorzugt 1,1 bis 2,1 Gew.-% 3-Ethyl-4-methylhexanol;
- 2,0 bis 4,0 Gew.-%, bevorzugt 2,2 bis 3,8 Gew.-%, besonders bevorzugt 2,5 bis 3,5 Gew.-% 2-Ethyl-4-methylhexanol;
- 0,5 bis 6,5 Gew.-%, bevorzugt 1,5 bis 6 Gew.-%, besonders bevorzugt 1,5 bis 5,5 Gew.-% sonstige Alkohole mit 9 Kohlenstoffatomen;
   mit der Maßgabe, dass sich die Gesamtsumme der genannten Komponenten 100 Gew.-% ergibt.

### Decanol

Bei Isodecanol, welches zur Synthese der in der erfindungsgemäßen Weichmacher-Zusammensetzung enthaltenen Diisodecylester der allgemeinen Formel (II) eingesetzt wird, handelt es sich nicht um eine einheitliche chemische Verbindung, sondern um ein komplexes Gemisch unterschiedlich verzweigter isomerer Decanole.

Diese werden im Allgemeinen durch die Nickel- oder Brønsted-Säure-katalysierte Trimerisierung von Propylen, beispielsweise nach dem vorstehend erläuterten PolyGas®- oder dem EMOGAS®-Verfahren, nachfolgende Hydroformylierung des dabei erhaltenen Isononen-Isomerengemisches mittels homogener Rhodium- oder Kobaltcarbonyl-Katalysatoren, vorzugsweise mittels Kobaltcarbonyl-Katalysatoren und Hydrierung des entstandenen Isodecanal-Isomerengemisches, z. B. mittels der vorstehend in Zusammenhang mit der Herstellung von C₇-C₉-Alkoholen genannten Katalysatoren und Verfahren (Ullmann's Encyclopedia of Industrial Chemistry; 5. Auflage, Bd. A1, S. 293, VCH Verlagsgesellschaft GmbH, Weinheim 1985), hergestellt. Das so produzierte Isodecanol ist im Allgemeinen stark verzweigt.

Bei 2-Propylheptanol, welches zur Synthese der in der erfindungsgemäßen Weichmacher-Zusammensetzung enthaltenen Di(2-propylheptyl)ester der allgemeinen Formel (II) eingesetzt wird, kann es sich um reines 2-Propylheptanol handeln oder um Propylheptanol-Isomerengemische, wie sie im Allgemeinen bei der industriellen Herstellung von 2-Propylheptanol gebildet werden und gemeinhin ebenfalls als 2-Propylheptanol bezeichnet werden.

Reines 2-Propylheptanol kann durch Aldolkondensation von n-Valeraldehyd und nachfolgende Hydrierung des dabei gebildeten 2-Propylheptenals, beispielsweise gemäß US-A 2921089, erhalten werden. Im Allgemeinen enthält kommerziell erhältliches 2-Propylheptanol neben der Hauptkomponente 2-Propylheptanol herstellungsbedingt eines oder mehrere der 2-Propylheptanol-Isomeren 2-Propyl-4-methylhexanol, 2-Propyl-5-methylhexanol, 2-Isopropyl-heptanol, 2-Isopropyl-4-methylhexanol, 2-Isopropyl-5-methylhexanol und/oder 2-Propyl-4,4-dimethylpentanol. Die Anwesenheit anderer Isomere des 2-Propylheptanols, beispielsweise 2-Ethyl-2,4-dimethylhexanol, 2-Ethyl-2-methyl-heptanol und/oder 2-Ethyl-2,5-dimethylhexanol im 2-Propylheptanol, ist möglich, aufgrund der geringen Bildungsraten der aldehydischen Vorläufer dieser Isomere im Zuge der Aldolkondensation sind diese, wenn überhaupt, nur in Spurenmengen im 2-Propylheptanol enthalten und spielen für die Weichmachereigenschaften des aus solchen 2-Propyheptanol-Isomerengemischen hergestellten Verbindungen praktisch keine Rolle.

Als Ausgangsmaterial zur Herstellung von 2-Propylheptanol können verschiedenerlei Kohlenwasserstoffquellen benutzt werden, beispielsweise 1-Buten, 2-Buten, Raffinat I - ein aus dem C₄-Schnitt eines Crackers nach Abtrennung von Allenen, Acetylenen und Dienen erhaltenes Alkan/Alken-Gemisch, das neben 1- und 2-Buten noch erhebliche Mengen an Isobuten enthält - oder Raffinat II, das aus Raffinat I durch Abtrennung von Isobuten erhalten wird und als Olefinkomponenten außer 1- und 2-Buten nur noch geringe Anteile an Isobuten enthält. Selbstverständlich können auch Gemische aus Raffinat I und Raffinat II als Rohstoff zur 2-Propylheptanol-Herstellung verwendet werden. Diese Olefine oder Olefingemische können nach an sich herkömmlichen Methoden mit Kobalt- oder Rhodium-Katalysatoren hydroformyliert werden, wobei aus 1-Buten ein Gemisch aus n- und iso-Valeraldehyd - die Bezeichnung iso-Valeraldehyd bezeichnet die Verbindung 2-Methylbutanal - gebildet wird, dessen n/iso-Verhältnis je nach verwendetem Katalysator und Hydroformylierungsbedingungen in relativ weiten Grenzen variieren kann. Beispielsweise wird bei Verwendung eines mit Triphenylphosphin modifizierten homogenen Rhodium-Katalysators (Rh/TPP) aus 1-Buten n- und iso-Valeraldehyd in einem n/iso-Verhältnis von im Allgemeinen 10 : 1 bis 20 : 1 gebildet, wohingegen bei Verwendung von mit Phosphit-Liganden, beispielsweise gemäß
US-A 5288918 oder WO 05028407, oder von mit Phosphoamidit-Liganden, beispielsweise gemäß WO 0283695, modifizierten Rhodium-Hydroformylierungskatalysatoren fast ausschließlich n-Valeraldehyd gebildet wird. Während das Rh/TPP-Katalysatorsystem 2-Buten bei der Hydroformylierung nur sehr langsam umsetzt, so dass der größte Teil des 2-Butens aus dem Hydroformylierungsgemisch wieder zurückgewonnen werden kann, gelingt die Hydroformylierung des 2-Butens mit den erwähnten Phosphit-Ligand- oder Phosphoramidit-Ligand-modifizierten Rhodium-Katalysatoren, wobei vorwiegend n-Valeraldehyd gebildet wird. Hingegen wird im olefinischen Rohstoff enthaltenes Isobuten, wenn auch mit unterschiedlicher Geschwindigkeit, von praktisch allen Katalysatorsystemen zu 3-Methylbutanal und je nach Katalysator in geringerem Umfang zu Pivalaldehyd hydroformyliert.

Die je nach verwendeten Ausgangsmaterialien und Katalysatoren erhaltenen C₅-Aldehyde, d. h. n-Valeraldehyd gegebenenfalls im Gemisch mit iso-Valeraldehyd, 3-Methylbutanal und/oder Pivalaldehyd, können vor der Aldolkondensation gewünschtenfalls vollständig oder teilweise destillativ in die Einzelkomponenten aufgetrennt werden, so dass auch hier eine Möglichkeit besteht, die Isomerenzusammensetzung der C₁₀-Alkoholkomponente der erfindungsgemäß eingesetzten Estergemische zu beeinflussen und zu steuern. Desgleichen ist es möglich, das C₅-Aldehydgemisch, wie es bei der Hydroformylierung gebildet wird, ohne die vorherige Abtrennung einzelner Isomere der Aldolkondensation zuzuführen. Bei der Aldolkondensation, die mittels eines basischen Katalysators, wie einer wässrigen Lösung von Natrium- oder Kaliumhydroxid, beispielsweise nach den in EP-A 366089, US-A 4426524 oder US-A 5434313 beschriebenen Verfahren durchgeführt werden kann, entsteht bei Einsatz von n-Valeraldehyd als einziges Kondensationsprodukt 2-Propylheptenal, wohingegen bei Einsatz eines Gemisches isomerer C₅-Aldehyde ein Isomerengemisch aus den Produkten der Homoaldolkondensation gleicher Aldehydmoleküle und der gekreuzten Aldolkondensation unterschiedlicher Valeraldehyd-Isomere geformt wird. Selbstverständlich kann die Aldolkondensation durch die gezielte Umsetzung einzelner Isomere so gesteuert werden, dass überwiegend oder vollständig ein einzelnes Aldolkondensationsisomer gebildet wird. Die betreffenden Aldolkondensationsprodukte können anschließend, üblicherweise nach vorausgegangener, vorzugsweise destillativer Abtrennung aus der Reaktionsmischung und gewünschtenfalls destillativer Reinigung, mit herkömmlichen Hydrierkatalysatoren, beispielsweise den vorstehend zur Hydrierung von Aldehyden genannten, zu den entsprechenden Alkoholen oder Alkoholgemischen hydriert werden.

Wie bereits erwähnt, können die in der erfindungsgemäßen Weichmacher-Zusammensetzung enthaltenen Verbindungen der allgemeinen Formel (II) mit reinem 2-Propylheptanol verestert sein. Im Allgemeinen werden zur Herstellung dieser Ester jedoch Gemische des 2-Propylheptanols mit den genannten Propylheptanol-Isomeren eingesetzt, in denen der Gehalt an 2-Propylheptanol mindestens 50 Gew.-%, vorzugsweise 60 bis 98 Gew.-% und besonders bevorzugt 80 bis 95 Gew.-%, insbesondere 85 bis 95 Gew.-% beträgt.

Geeignete Mischungen von 2-Propylheptanol mit den Propylheptanol-Isomeren umfassen beispielsweise solche aus 60 bis 98 Gew.-% 2-Propylheptanol, 1 bis 15 Gew.-% 2-Propyl-4-methyl-hexanol und 0,01 bis 20 Gew.-% 2-Propyl-5-methyl-hexanol und 0,01 bis 24 Gew.-% 2-Isopropylheptanol, wobei die Summe der Anteile der einzelnen Bestandteile 100 Gew.-% nicht überschreitet. Bevorzugt addieren sich die Anteile der einzelnen Bestandteile zu 100 Gew.-%.

Weitere geeignete Mischungen aus 2-Propylheptanol mit den Propylheptanol-Isomeren umfassen beispielsweise solche aus 75 bis 95 Gew.-% 2-Propylheptanol, 2 bis 15 Gew.-% 2-Propyl-4-methyl-hexanol, 1 bis 20 Gew.-% 2-Propyl-5-methyl-hexanol, 0,1 bis 4 Gew.-% 2-Isopropylheptanol, 0,1 bis 2 Gew.-% 2-Isopropyl-4-methylhexanol und 0,1 bis 2 Gew.-% 2-Isopropyl-5-methyl-hexanol, wobei die Summe der Anteile der einzelnen Bestandteile 100 Gew.-% nicht überschreitet. Bevorzugt addieren sich die Anteile der einzelnen Bestandteile zu 100 Gew.-%.

Bevorzugte Mischungen von 2-Propylheptanol mit den Propylheptanol-Isomeren umfassen solche mit 85 bis 95 Gew.-% 2-Propylheptanol, 5 bis 12 Gew.-% 2-Propyl-4-methyl-hexanol und 0,1 bis 2 Gew.-% 2-Propyl-5-methylhexanol und 0,01 bis 1 Gew.-% 2-Isopropylheptanol, wobei die Summe der Anteile der einzelnen Bestandteile 100 Gew.-% nicht überschreitet. Bevorzugt addieren sich die Anteile der einzelnen Bestandteile zu 100 Gew.-%.

Bei Verwendung der genannten 2-Propylheptanol-Isomerengemische anstelle von reinem 2-Propylheptanol zur Herstellung der Verbindungen der allgemeinen Formel (II) entspricht die Isomerenzusammensetzung der Alkylestergruppen bzw. Alkylethergruppen praktisch der Zusammensetzung der zur Veresterung verwendeten Propylheptanol-Isomerengemische.

### Undecanol

Die Undecanole, die zur Herstellung der in der erfindungsgemäßen Weichmacher-Zusammensetzung enthaltenen Verbindungen der allgemeinen Formel (II) eingesetzt werden, können geradkettig oder verzweigt sein oder aus Gemischen geradkettiger und verzweigter Undecanole zusammengesetzt sein. Bevorzugt werden Gemische aus verzweigten Undecanolen, auch als Isoundecanol bezeichnet, als Alkoholkomponente verwendet.

Im Wesentlichen geradkettiges Undecanol kann durch die Rhodium- oder vorzugsweise Kobalt-katalysierte Hydroformylierung von 1-Decen und nachfolgende Hydrierung des dabei erhaltenen n-Undecanals erhalten werden. Das Ausgangsolefin 1-Decen wird über das zuvor bei der Herstellung von 1-Octen erwähnte SHOP-Verfahren hergestellt.

Zur Herstellung verzweigten Isoundecanols kann das im SHOP-Verfahren erhaltene 1-Decen einer Skelettisomerisierung, z. B. mittels acider zeolithischer Molekularsiebe, wie in WO 9823566 beschrieben, unterzogen werden, wobei sich Gemische aus isomeren Decenen bilden, deren Rhodium- oder vorzugsweise Kobalt-katalysierte Hydroformylierung und nachfolgende Hydrierung der erhaltenen Isoundecanal-Gemische zu dem zur Herstellung der erfindungsgemäß eingesetzten Verbindungen (II) verwendeten Isoundecanols führt. Die Hydroformylierung von 1-Decen oder Isodecen-Gemischen mittels Rhodium- oder Kobalt-Katalyse kann wie zuvor in Zusammenhang mit der Synthese von C₇- bis C₁₀-Alkoholen beschrieben erfolgen. Entsprechendes gilt für die Hydrierung von n-Undecanal oder Isoundecanal-Gemischen zu n-Undecanol bzw. Isoundecanol.

Nach destillativer Reinigung des Austrags der Hydrierung können die so erhaltenen C₇- bis C₁₁-Alkylalkohole bzw. deren Gemische, wie vorstehend beschrieben, zur Herstellung der erfindungsgemäß eingesetzten Diesterverbindungen der allgemeinen Formel (II) verwendet werden.

### Dodecanol

Im Wesentlichen geradkettiges Dodecanol kann in vorteilhafter Weise über das Alfol®- oder Epal®-Verfahren gewonnen werden. Diese Verfahren beinhalten die Oxidation und Hydrolyse geradkettiger Trialkylaluminium-Verbindungen, welche ausgehend von Triethylaluminium schrittweise über mehrere Ethylierungsreaktionen unter Verwendung von Ziegler-Natta-Katalysatoren aufgebaut werden. Aus den daraus resultierenden Gemischen weitgehend geradkettiger Alkylalkohole unterschiedlicher Kettenlänge kann nach dem destillativen Austrag der C₁₂-Alkylalkohol-Fraktion das gewünschte n-Dodecanol erhalten werden.

Alternativ kann n-Dodecanol auch durch Hydrogenierung natürlicher Fettsäuremethylester, beispielsweise aus Kokosnussöl, hergestellt werden.

Verzweigtes Isododecanol kann analog zu den bekannten Verfahren zur Codimerisierung und/oder Oligomerisierung von Olefinen, wie beispielsweise in der WO 0063151 beschrieben, mit nachfolgender Hydroformylierung und Hydrierung der Isoundecen-Gemische, wie beispielsweise in der DE-A 4339713 beschrieben, erhalten werden. Nach destillativer Reinigung des Austrags der Hydrierung können die so erhaltenen Isododecanole bzw. deren Gemische, wie vorstehend beschrieben, zur Herstellung der erfindungsgemäß eingesetzten Diesterverbindungen der allgemeinen Formel (II) verwendet werden.

Wie bereits oben dargelegt, weisen die erfindungsgemäß eingesetzte Weichmacher-Zusammensetzung, enthaltend wenigstens eine Verbindung der allgemeinen Formel (I) und wenigstens eine Verbindung der allgemeinen Formel (II), wie zuvor definiert, eine hohe Verträglichkeit mit den weichzumachenden Polymeren auf und verleihen diesen exzellente Geliereigenschaften. Trotzdem zeigen die so weichgemachten Polymermischungen eine niedrige Weichmacherflüchtigkeit sowohl bei der Verarbeitung als auch während des Gebrauchs der Endprodukte.

Ein weiterer Gegenstand der Erfindung betrifft daher die Verwendung einer Weichmacher-Zusammensetzung, enthaltend wenigstens eine Verbindung der allgemeinen Formel (I) und wenigstens eine Verbindung der allgemeinen Formel (II), wie zuvor definiert, als Weichmacher für thermoplastische Polymere und Elastomere, wobei der Anteil der Verbindungen (I) wenigstens 11 Gewichtsteile bezogen auf 100 Gewichtsteile des weichzumachenden thermoplastischen Polymers oder Elastomers (phr) beträgt.

### Plastisolanwendungen

Aufgrund ihrer guten Geliereigenschaften eignen sich die erfindungsgemäß eingesetzten Weichmacher-Zusammensetzungen insbesondere zur Herstellung von Plastisolen.

Ein weiterer Gegenstand der Erfindung betrifft daher die Verwendung einer Weichmacher-Zusammensetzung enthaltend wenigstens eine Verbindungen der allgemeinen Formel (I) und wenigstens eine Verbindung der allgemeinen Formel (II), wie zuvor definiert, als Weichmacher in einem Plastisol, wobei der Anteil der Verbindungen (I) wenigstens 11 Gewichtsteile bezogen auf 100 Gewichtsteile des weichzumachenden thermoplastischen Polymers oder Elastomers (phr) beträgt.

Plastisole können aus verschiedenen Kunststoffen hergestellt werden. Bei den erfindungsgemäßen Plastisolen handelt es sich in einer bevorzugten Ausführungsform um ein PVC-Plastisol.

Der Gesamtweichmacheranteil der erfindungsgemäßen PVC-Plastisole beträgt üblicherweise 22 bis 400 phr, bevorzugt 30 bis 200 phr. Dabei beträgt der Gehalt an Weichmachern der allgemeinen Formel (I) der PVC-Plastisole bevorzugt mindestens 11 phr, besonders bevorzugt mindestens 13 phr und insbesondere mindestens 15 phr.

Plastisole werden üblicherweise bei Umgebungstemperatur durch verschiedene Verfahren, wie Streichverfahren, Siebdruckverfahren, Gießverfahren, wie das Schalengieß- oder Rotationsgießverfahren, Tauchverfahren, Spritzverfahren und dergleichen in die Form des fertigen Produkts gebracht. Anschließend erfolgt durch Erwärmung die Gelierung, wobei nach Abkühlung ein homogenes, mehr oder weniger flexibles Produkt erhalten wird.

PVC-Plastisole eignen sich insbesondere zur Herstellung von PVC-Folien, für die Herstellung von nahtlosen Hohlkörpern, Handschuhen und zur Anwendung im Textilbereich, wie z. B. für Textilbeschichtungen.

Speziell eignen sich die PVC-Plastisole auf Basis der erfindungsgemäß eingesetzten Weichmacher-Zusammensetzung zur Produktion von künstlichem Leder, z.B. von künstliches Leder für den Kraftfahrzeugbau; Unterbodenschutz für Kraftfahrzeuge; Nahtabdichtungen; Teppichrückseitenbeschichtungen; schwere Beschichtungen; Förderbänder; Tauchbeschichtungen und mittels Tauchverfahren hergestellte Artikel; Spielzeug, wie Puppen, Bälle oder Spielzeugtiere; anatomische Modelle für die Ausbildung; Bodenbeläge; Wandbeläge; (beschichtete) Textilien, wie Latex-Kleidung, Schutzbekleidung oder Regenkleidung, wie Regenjacken; Planen; Zelte; Bandbeschichtungen; Dachbahnen; Dichtungsmassen für Verschlüsse; Atemmasken und Handschuhe.

### Anwendungen Formmasse

Die erfindungsgemäße Formmasse wird bevorzugt für die Herstellung von Formkörpern und Folien verwendet. Dazu gehören insbesondere Gehäuse von Elektrogeräten, wie beispielsweise Küchengeräten und Computergehäuse; Werkzeuge; Apparate; Rohrleitungen; Kabel; Schläuche, wie beispielsweise Kunststoffschläuche, Wasser- und Bewässerungsschläuche, Industrie-Gummischläuche oder Chemieschläuche; Draht-Ummantelungen; Fensterprofile; Komponenten für den Fahrzeugbau, wie beispielsweise Karosseriebestandteile, Vibrationsdämpfer für Motoren; Reifen; Möbel, wie beispielsweise Stühle, Tische oder Regale; Schaumstoff für Polster und Matratzen; Dichtungen; Verbundfolien, wie Folien für Verbundsicherheitsglas, insbesondere für Fahrzeug- und Fensterscheiben; Schallplatten; Verpackungsbehälter; Klebebandfolien oder Beschichtungen.

Daneben eignet sich die erfindungsgemäße Formmasse zusätzlich für die Herstellung von Formkörpern und Folien, die direkt mit Menschen oder Nahrungsmitteln in Kontakt kommen. Dabei handelt es sich vorwiegend um Medizinprodukte, Hygieneprodukte, Lebensmittelverpackungen, Produkte für den Innenraumbereich, Spielzeug und Kinderpflegeartikel, Sport- und Freizeitprodukte, Bekleidung oder Fasern für Gewebe und dergleichen.

Bei den Medizinprodukten, die aus der erfindungsgemäßen Formmasse hergestellt werden können, handelt es sich beispielsweise um Schläuche für enterale Ernährung und Hämodialyse, Beatmungsschläuche, Infusionsschläuche, Infusionsbeutel, Blutbeutel, Katheter, Trachealtuben, Einmalspritzen, Handschuhe oder Atemmasken.

Bei den Lebensmittelverpackungen, die aus der erfindungsgemäßen Formmasse hergestellt werden können, handelt es sich beispielsweise um Frischhaltefolien, Lebensmittelschläuche, Trinkwasserschläuche, Behälter zur Aufbewahrung oder zum Einfrieren von Lebensmitteln, Deckeldichtungen, Verschlusskappen, Kronkorken oder künstliche Weinkorken.

Bei den Produkten für den Innenraumbereich, die aus der erfindungsgemäßen Formmasse hergestellt werden können, handelt es sich beispielsweise um Bodenbeläge, welche homogen oder aus mehreren Schichten, bestehend aus mindestens einer geschäumten Schicht, aufgebaut sein können, wie beispielsweise Fußbodenbeläge, Sportböden oder Luxury Vinyl Tiles (LVT), Kunstleder, Wandbeläge oder geschäumte oder nicht geschäumte Tapeten in Gebäuden oder um Verkleidungen oder Konsolenabdeckungen in Fahrzeugen.

Bei den Spielzeugen und Kinderpflegeartikeln, die aus der erfindungsgemäßen Formmasse hergestellt werden können, handelt es sich beispielsweise um Puppen, aufblasbares Spielzeug wie Bälle, Spielfiguren, Spielzeugtiere, anatomische Modelle, Knete, Schwimmhilfen, Kinderwagen-Abdeckhauben, Wickelauflagen, Wärmflaschen, Beißringe oder Fläschchen.

Bei den Sport und Freizeitprodukten, die aus der erfindungsgemäßen Formmasse hergestellt werden können, handelt es sich beispielsweise um Gymnastikbälle, Übungsmatten, Sitzkissen, Massagebälle und -rollen, Schuhe bzw. Schuhsohlen, Bälle, Luftmatratzen oder Trinkflaschen.

Bei der Bekleidung, die aus den erfindungsgemäßen Formmassen hergestellt werden können, handelt es sich beispielsweise um Gummistiefel.

### Nicht-PVC-Anwendungen

Daneben beinhaltet die vorliegende Erfindung die Verwendung der erfindungsgemäß eingesetzten Weichmacher-Zusammensetzung, wie zuvor definiert, als Hilfsmittel oder/und in Hilfsmitteln, ausgewählt unter: Kalandrierhilfsmitteln; Rheologiehilfsmitteln; oberflächenaktive Zusammensetzungen wie Fließ-, Filmbildehilfen, Entschäumern, Schaumverhütern, Benetzungsmitteln, Koaleszenzmitteln und Emulgatoren; Schmierstoffen, wie Schmierölen, Schmierfetten und Schmierpasten; Quenchern für chemische Reaktionen; Phlegmatisierungsmitteln; pharmazeutischen Produkten; Weichmachern in Klebstoffen oder Dichtstoffen; Schlagzähmodifizierern und Stellmitteln.

Die Erfindung wird anhand der im Folgenden beschriebenen Figuren und der Beispiele näher erläutert. Dabei sollen die Figuren und Beispiele nicht als einschränkend für die Erfindung verstanden werden.

In den nachfolgenden Beispielen und Figuren werden folgende Abkürzungen verwendet:
DBA steht für Di-(n-butyl)-adipat,
INB steht für Isononylbenzoat,
IDB steht für Isodecylbenzoat,
HD bzw. DINCH steht für Diisononylcyclohexandicarboxylat,
DINP steht für Diisononylphthalat,
phr steht für Gewichtsteile pro 100 Gewichtsteile Polymer.

### FIGURENBESCHREIBUNG

Figur 1:

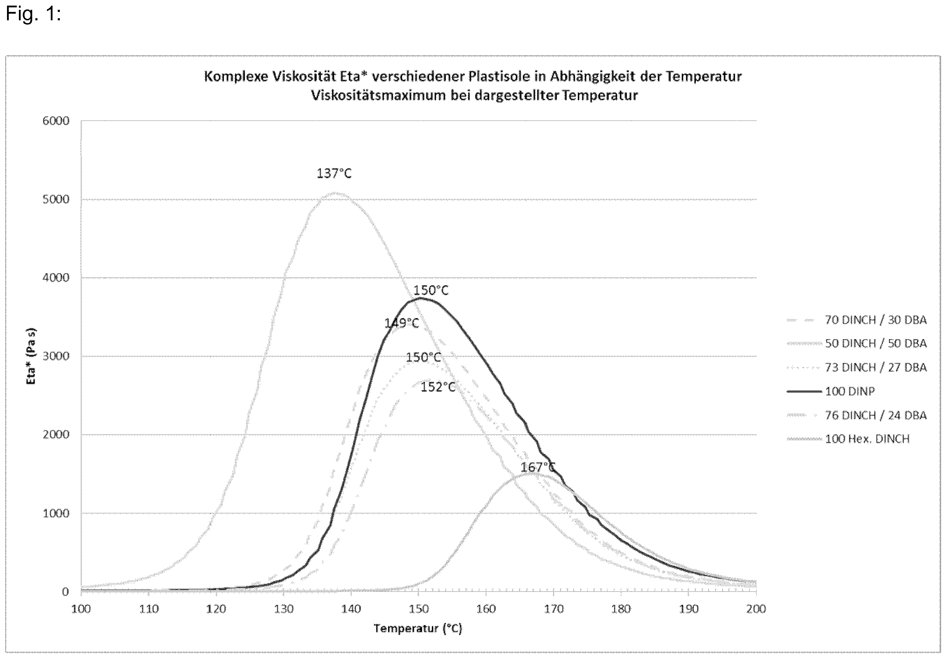

   Figur 1 zeigt das Gelierverhalten von PVC-Plastisolen mit einem Gesamtanteil an erfindungsgemäß eingesetzter Weichmacher-Zusammensetzung von jeweils 100 phr. Dargestellt ist die komplexe Viskosität Eta [Pa*s] der Plastisole in Abhängigkeit der Temperatur [°C]. Dabei wurden Weichmacher-Zusammensetzungen verwendet, die den kommerziell erhältlichen Weichmacher Hexamoll® DINCH® und Di-n-butyladipat (DBA) in unterschiedlichen Mengenverhältnissen enthalten. Als Vergleich ist zusätzlich das Gelierverhalten von PVC-Plastisolen dargestellt, die ausschließlich die kommerziell erhältlichen Weichmacher Hexamoll® DINCH® (Hex. DINCH) oder Palatinol® N (DINP) enthalten.
Figur 2:

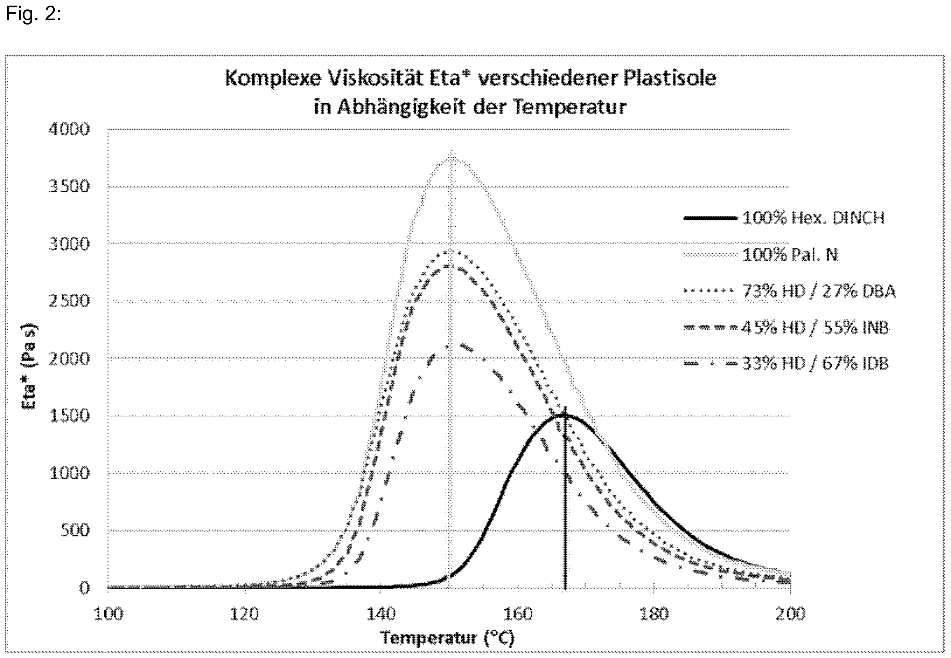

   Figur 2 zeigt das Gelierverhalten von PVC-Plastisolen, die als Weichmacher spezifische Abmischungen von Hexamoll® DINCH® mit Di-n-butyladipat (DBA) und den kommerziell erhältlichen Schnellgelierern Vestinol® INB (INB) oder Jayflex® MB 10 (IDB) enthalten. Der Anteil der Schnellgelierer in den Weichmachermischungen ist so gewählt, dass eine Geliertemperatur von 150 °C erreicht wird. Dargestellt ist die komplexe Viskosität Eta [Pa*s] der Plastisole in Abhängigkeit der Temperatur [°C]. Zusätzlich ist als Vergleich das Gelierverhalten von PVC-Plastisolen dargestellt, die ausschließlich die kommerziell erhältlichen Weichmacher Hexamoll® DINCH® (Hex. DINCH) oder Palatinol® N (Pal. N) enthalten. Der Gesamtweichmachergehalt der Plastisole beträgt 100 phr.
Figur 3:

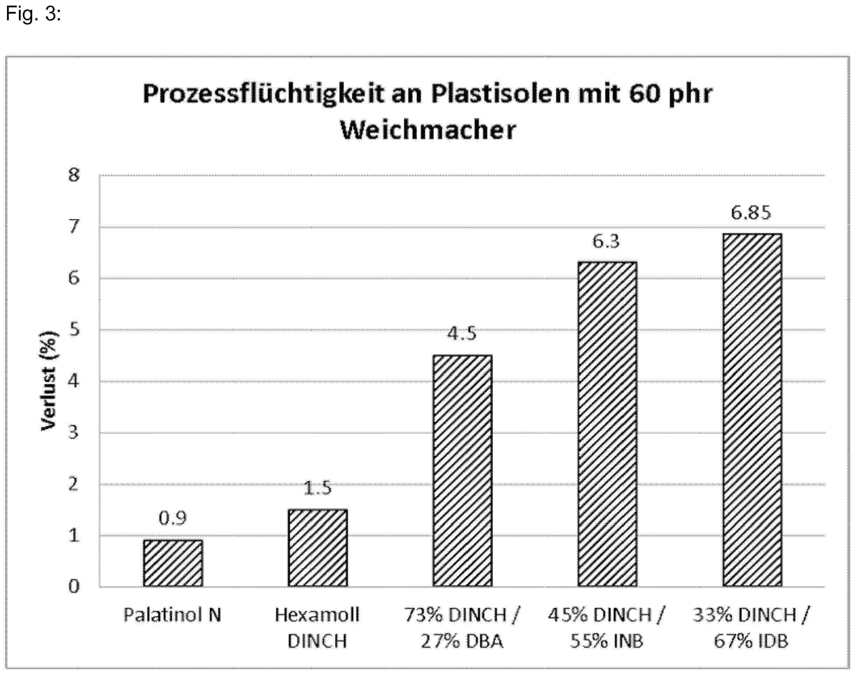

   Figur 3 zeigt die Prozessflüchtigkeit von PVC Plastisolen, enthaltend 60 phr der erfindungsgemäß eingesetzten Weichmacher-Zusammensetzung sowie verschiedene Abmischungen von Hexamoll® DINCH® mit den kommerziell erhältlichen Schnellgelierern Vestinol® INB (INB) oder Jayflex® MB 10 (IDB). Dargestellt ist der Gewichtsverlust der Plastisole in %. Zusätzlich ist die Prozessflüchtigkeit von PVC-Plastisolen dargestellt, die ausschließlich die kommerziell erhältlichen Weichmacher Hexamoll® DINCH® oder Palatinol® N (DINP) enthalten.
Figur 4:

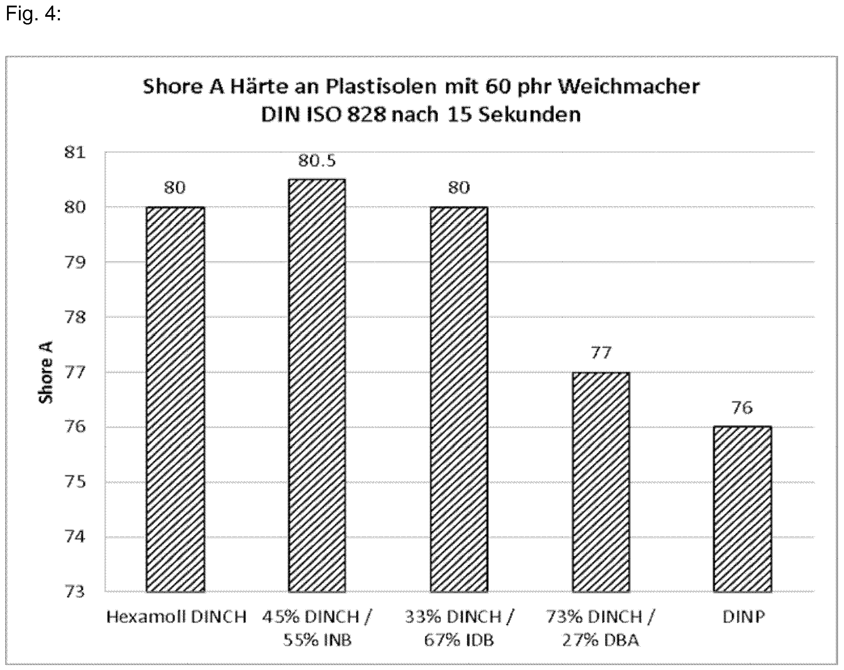

   Figur 4 zeigt die Shore A Härte von PVC-Folien, die aus PVC Plastisolen, enthaltend 60 phr der erfindungsgemäß eingesetzten Weichmacher-Zusammensetzung sowie verschiedene Abmischungen von Hexamoll® DINCH® mit den kommerziell erhältlichen Schnellgelierern Vestinol® INB (INB) oder Jayflex® MB 10 (IDB), hergestellt wurden. Zusätzlich ist die Prozessflüchtigkeit von Folien dargestellt, die aus PVC Plastisolen, enthaltend ausschließlich die kommerziell erhältlichen Weichmacher Hexamoll® DINCH® oder Palatinol® N (DINP), hergestellt wurden.
Figur 5:

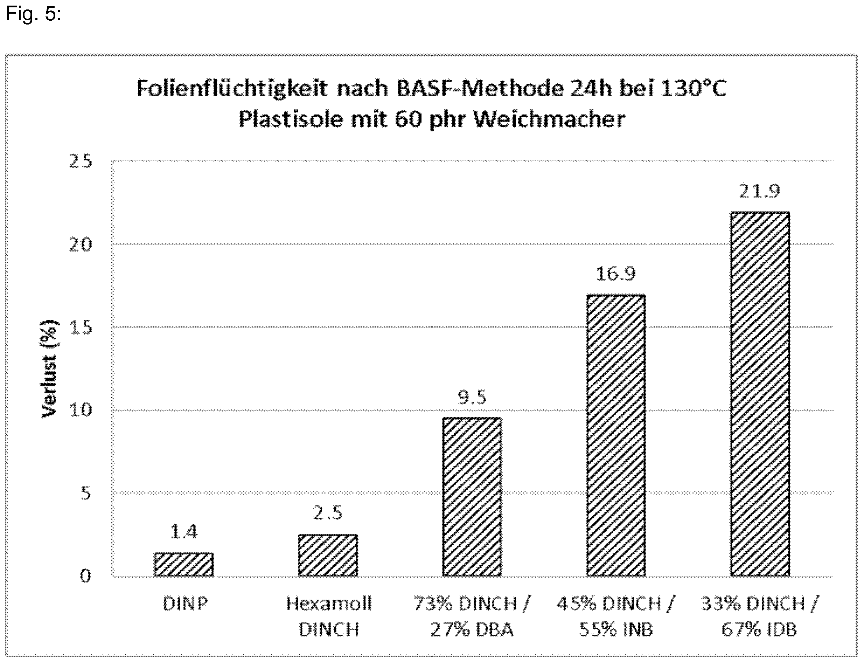

   Figur 5 zeigt die Folienflüchtigkeit von PVC-Folien, die aus Plastisolen, enthaltend 60 phr der erfindungsgemäß eingesetzten Weichmacher-Zusammensetzung sowie verschiedene Abmischungen von Hexamoll® DINCH® mit den kommerziell erhältlichen Schnellgelierern Vestinol® INB (INB) oder Jayflex® MB 10 (IDB), hergestellt wurden. Dargestellt ist der Gewichtsverlust der PVC-Folien in %. Zusätzlich ist die Folienflüchtigkeit von PVC-Folien dargestellt, die aus Plastisolen hergestellt wurden, die ausschließlich die kommerziell erhältlichen Weichmacher Hexamoll® DINCH® oder Palatinol® N (DINP) enthalten.
Figur 6:

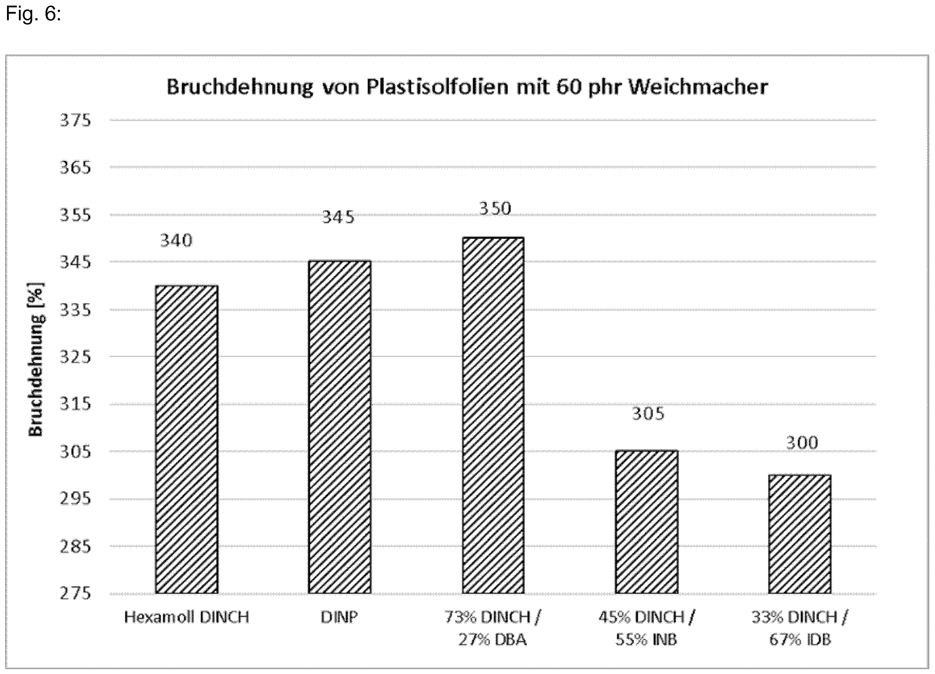

   Figur 6 zeigt die Bruchdehnung von PVC-Folien, die aus Plastisolen, enthaltend 60 phr der erfindungsgemäß eingesetzten Weichmacher-Zusammensetzung sowie verschiedene Abmischungen von Hexamoll® DINCH® mit den kommerziell erhältlichen Schnellgelierern Vestinol® INB (INB) oder Jayflex® MB 10 (IDB), hergestellt wurden.
Figur 7:

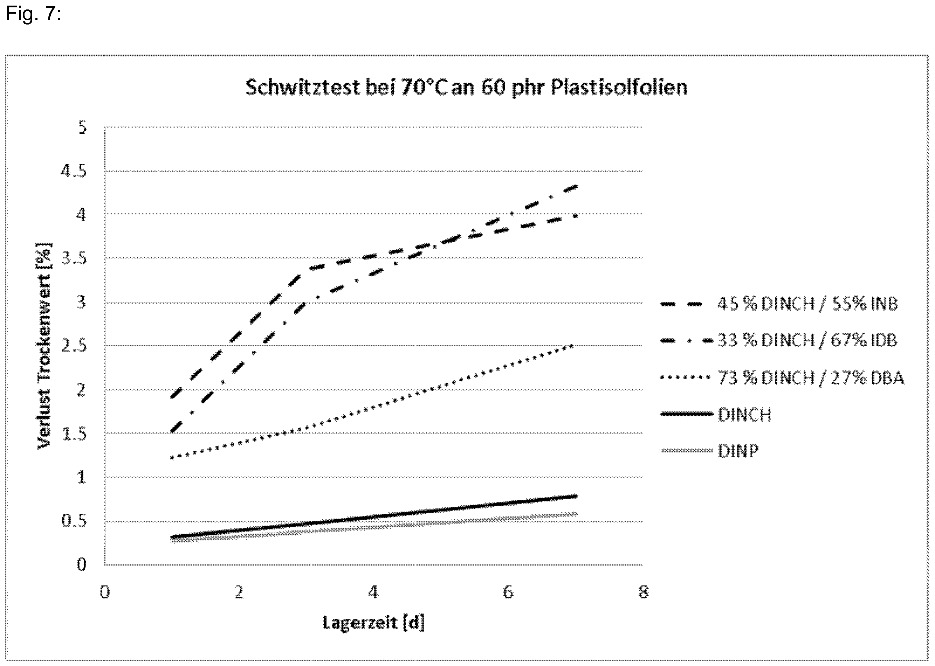

   Figur 7 zeigt die Lagerstabilität von PVC-Folien, die aus Plastisolen, enthaltend 60 phr der erfindungsgemäß eingesetzten Weichmacher-Zusammensetzung sowie verschiedene Abmischungen von Hexamoll® DINCH® mit den kommerziell erhältlichen Schnellgelierern Vestinol® INB (INB) oder Jayflex® MB 10 (IDB), hergestellt wurden. Dargestellt ist der Verlust an Trockengewicht [%] in Abhängigkeit der Lagerzeit [d].

### BEISPIELE

In den Beispielen werden folgende Einsatzstoffe verwendet:

| **Einsatzstoff** | **Hersteller** |
|---|---|
| Homopolymeres Emulsions-PVC , Markenname Solvin® 367 NC | SolVin SA, Brussels, Belgium |
| Homopolymeres Emulsions-PVC, Markenname Vinnolit® P 70 | Vinnolit GmbH, Ismaning, Germany |
| Isononylbenzoat (Abkürzung: INB), Markenname Vestinol® INB | Evonik, Marl, Germany |
| Isodecylbenzoat (Abkürzung: IDB), Markenname Jayflex® MB 10 | Exxonmobil Chemical Belgium, Antwerpen, Belgium |
| Diisononylcyclohexandicarboxylat (Abkürzung: HD bzw. DINCH), Markenname Hexamoll® DINCH® | BASF SE, Ludwigshafen, Deutschland |
| Diisononylphthalat (Abkürzung: DINP), Markenname Palatinol® N | BASF SE, Ludwigshafen, Deutschland |
| Ba-Zn Stabilisator, Markenname Reagens® SLX/781 | Reagens S.p.A., Bologna, Italy |

### I) Herstellung einer erfindungsgemäß eingesetzten Verbindung (I):

### Beispiel 1

### Synthese von Di-(n-butyl)-adipat (Abkürzung: DBA) durch direkte Veresterung

In einem 2 L Rundkolben, ausgestattet mit einem Dean-Stark Wasserabscheider und einem Tropftrichter mit Druckausgleich, wurden 445 g (6,00 mol, 4,0 Äquivalente) n-Butanol in 500 g Toluol vorgelegt. Die Mischung wurde unter Rühren bis zum Rückfluss erhitzt und 219 g (1,50 mol, 1,0 Äquivalente) Adipinsäure gefolgt von 11,5 g (0,12 mol, 8 mol-%) 99,9%iger Schwefelsäure in 3 bis 4 Portionen zugegeben, wann immer sich die Umsetzung verlangsamte. Der Reaktionsverlauf wurde anhand der Menge an abgeschiedenem Wasser in der Dean-Stark-Apparatur verfolgt. Nach vollständigem Umsatz wurde dem Reaktionsgemisch eine Probe entnommen und mittels GC analysiert. Die Reaktionsmischung wurde auf Raumtemperatur abgekühlt, in einen Scheidetrichter überführt und zweimal mit gesättigter NaHCO₃-Lösung gewaschen. Die organische Phase wurde mit gesättigter Kochsalzlösung gewaschen, mit wasserfreiem Na₂SO₄ getrocknet und das Lösungsmittel unter reduziertem Druck entfernt. Das Rohprodukt wurde mittels fraktionierter Destillation gereinigt.

Das so erhaltene Di-n-butyladipat besitzt eine Dichte von 0,960 g/cm³ (ermittelt nach DIN 51757), eine Viskosität von 6,0 mPa*s (nach DIN 51562), einen Brechungsindex n_{D}²⁰ von 1,4350 (nach DIN 51423), eine Säurezahl von 0,03 mg KOH/g (nach DIN EN ISO 2114), einen Wassergehalt von 0,02 % (nach DIN 51777, Teil 1) und eine Reinheit nach GC von 99,86 %.

### II) Anwendungstechnische Prüfungen:

### II.a) Bestimmung der Lösetemperatur nach DIN 53408:

Zur Charakterisierung des Gelierverhaltens der erfindungsgemäß eingesetzten Verbindungen (I) in PVC wurde die Lösetemperatur nach DIN 53408 bestimmt. Nach DIN 53408 wird ein Tropfen einer Aufschlämmung von 1 g PVC in 19 g Weichmacher unter einem mit einem heizbaren Mikroskoptisch ausgestatteten Mikroskop im durchscheinenden Licht beobachtet. Die Temperatur wird dabei ab 60 °C linear um 2 °C pro Minute erhöht. Als Lösetemperatur gilt die Temperatur, bei welcher die PVC-Teilchen unsichtbar werden, d. h. deren Konturen und Kontraste nicht mehr zu erkennen sind. Je niedriger die Lösetemperatur, desto besser ist das Gelierverhalten der betreffenden Substanz für PVC.

In der nachfolgenden Tabelle sind die Lösetemperaturen des erfindungsgemäß eingesetzten Weichmachers Di-n-butyladipat und als Vergleich die Lösetemperaturen der kommerziell erhältlichen Schnellgelierer Isononylbenzoat (INB), Markenname Vestinol® INB, Isodecylbenzoat (IDB), Markenname Jayflex® MB 10, die kommerziell erhältlichen Weichmacher Diisononylcyclohexandicarboxylat (DINCH), Markenname Hexamoll® DINCH®, und Diisononylphthalat (DINP), Markenname Palatinol® N, aufgeführt.

| Bsp.-Nr. | Substanz | Lösetemperatur nach DIN 53408 [°C] |
|---|---|---|
| 1 | Di-n-butyladipat | 119 |
| V1 | Vestinol® INB | 128 |
| V2 | Jayflex® MB 10 | 131 |
| V3 | Hexamoll® DINCH® | 151 |
| V4 | Palatinol® N | 131 |

Wie aus der Tabelle ersichtlich, zeigt der erfindungsgemäß eingesetzte Schnellgelierer Di-n-butyladipat eine deutlich niedrigere Lösetemperatur für PVC als die beiden kommerziell erhältlichen Schnellgelierer INB (Vestinol® INB) und IDB (Jayflex® MB 10) oder die beiden kommerziell erhältlichen Weichmachern Hexamoll® DINCH® und DINP (Palatinol® N).

### II.b) Bestimmung des Gelierverhaltens von PVC-Plastisole, enthaltend erfindungsgemäß eingesetzte Weichmacher-Zusammensetzungen:

Zur Untersuchung des Gelierverhaltens von PVC-Plastisole, enthaltend die erfindungsgemäß eingesetzten Weichmacher-Zusammensetzungen, wurden PVC-Plastisole, die Mischungen des kommerziell erhältlichen Weichmacher Hexamoll® DINCH® mit dem Schnellgelierer Di-n-butyladipat in unterschiedliche Mengenverhältnissen (Hexamoll® DINCH® zu Di-n-butyladipat 50/50, 70/30, 73/27 und 76/24) enthalten, nach folgender Rezeptur hergestellt:

| **Einsatzstoff** | **Anteil [phr]** |
|---|---|
| PVC (Mischung aus 70 Gewichtsteilen Homopolymeres Emulsions-PVC, Markenname Solvin® 367 NC, und 30 Gewichtsteilen Homopolymeres Emulsions-PVC, Markenname Vinnolit® P 70) | 100 |
| Erfindungsgemäß eingesetzte Weichmacher-Zusammensetzung | 100 |
| Ba-Zn Stabilisator, Typ Reagens® SLX/781 | 2 |

Als Vergleich wurden zudem Plastisole hergestellt, die ausschließlich die kommerziell erhältlichen Weichmacher Hexamoll® DINCH® oder DINP (Palatinol® N) enthalten.

Die Herstellung der Plastisole erfolgte in der Weise, dass die zwei PVC-Typen in einem PE- (Polyethylen-) Becher zusammen eingewogen wurden. In einen zweiten PE-Becher wurden die flüssigen Komponenten eingewogen. Mit Hilfe eines Dissolvers (Fa. Jahnke & Kunkel, IKA-Werk, Typ RE-166 A, 60-6000 1/min, Durchmesser Dissolverscheibe = 40 mm) wurde bei 400 U/min das PVC in die flüssigen Komponenten eingerührt. Nachdem ein Plastisol entstanden war, wurde die Drehzahl auf 2500 1/min erhöht und 150 s homogenisiert. Das Plastisol wurde aus dem PE-Becher in eine Stahlschale überführt und diese in einem Exsikkator einem Druck von 10 mbar ausgesetzt. Dadurch soll die in dem Plastisol enthaltene Luft entfernt werden. Je nach Luftgehalt bläht sich das Plastisol mehr oder weniger stark auf. In diesem Stadium wird durch Schütteln des Exsikkators die Oberfläche des Plastisols zerstört und zum kollabieren gebracht. Ab diesem Zeitpunkt wird das Plastisol noch 15 min in dem Exsikkator bei einem Druck von 10 mbar belassen. Danach wird die Vakuumpumpe abgeschaltet, der Exsikkator belüftet und das Plastisol wieder in den PE-Becher überführt. Das Plastisol ist nun bereit für die rheologischen Messungen. Messbeginn war bei allen Plastisolen 30 min nach der Homogenisierung.

Um ein flüssiges PVC-Plastisol zu gelieren und vom Zustand homogen in Weichmacher dispergierter PVC-Partikel in eine homogene, feste Weich-PVC-Matrix zu überführen, muss die dafür notwendige Energie in Form von Wärme zugeführt werden. In einem Verarbeitungsprozess stehen dafür die Parameter Temperatur und Verweilzeit zur Verfügung. Je schneller die Gelierung abläuft (Indiz ist hier die Lösetemperatur, d. h. je niedriger diese ist, desto schneller geliert das Material), umso geringer kann die Temperatur (bei gleicher Verweilzeit) oder die Verweilzeit (bei gleicher Temperatur) gewählt werden.

Die Untersuchung des Gelierverhaltens eines Plastisols erfolgt nach interner Methode mit einem Rheometer MCR101 der Firma Anton Paar. Gemessen wird hierbei die Viskosität der Paste unter Aufheizen bei konstanter, geringer Scherung (Oszillation). Für die Oszillationsversuche wurden folgende Parameter verwendet:

| Messsystem: | Parallele Platten, 50 mm Durchmesser |
|---|---|
| Amplitude (gamma): | 1% |
| Frequenz: | 1 Hz |
| Spaltbreite: | 1 mm |
| Ausgangstemperatur: | 20°C |
| Temperaturprofil: | 20°C - 200°C |
| Heizrate: | 10°C/min |
| Anzahl Messpunkte: | 201 |
| Messdauer der einzelnen Messpunkte: | 0.09 min |

Die Messung erfolgte in zwei Schritten. Der erste Schritt dient lediglich der Temperierung der Probe. Bei 20°C wird das Plastisol für 2 min bei konstanter Amplitude (gamma = 1%) leicht geschert. Im zweiten Schritt beginnt das Temperaturprogramm. Bei der Messung werden der Speichermodul und der Verlustmodul aufgezeichnet. Aus diesen beiden Größen wird die komplexe Viskosität η * errechnet. Die Temperatur, bei der das Maximum der komplexen Viskosität erreicht ist, wird als die Geliertemperatur des Plastisols bezeichnet.

Wie in der Figur 1 sehr gut zu erkennen ist, gelieren die PVC-Plastisole, enthaltend die erfindungsgemäß eingesetzten Weichmacher-Zusammensetzungen im Vergleich zu dem PVC-Plastisol, welches ausschließlich den kommerziell erhältlichen Weichmacher Hexamoll® DINCH® enthält, bei wesentlich niedrigeren Temperaturen. Bereits bei einer Zusammensetzung von 73 % Hexamoll® DINCH® und 23 % Di-n-butyladipat wird eine Geliertemperatur von 150 °C erreicht, die der Geliertemperatur des kommerziell erhältlichen Weichmachers Palatinol® N entspricht und die für viele Plastisolanwendungen ausreichend ist. Durch weitere Erhöhung des Anteils des Schnellgelierers Di-n-butyladipat in den erfindungsgemäß eingesetzten Weichmacher-Zusammensetzungen lässt sich die Geliertemperatur der Plastisole weiter deutlich absenken.

### II.c) Bestimmung des Gelierverhaltens von PVC-Plastisolen, enthaltend Weichmacher-Zusammensetzungen aus kommerziell erhältlichen Schnellgelierern, im Vergleich zu Plastisolen, enthaltend erfindungsgemäß eingesetzten Weichmacher-Zusammensetzungen:

Um das Gelierverhalten von PVC-Plastisolen, die Weichmacher-Zusammensetzungen aus kommerziell erhältlichen Schnellgelierern enthalten, mit PVC-Plastisole, die die erfindungsgemäß eingesetzte Weichmacher-Zusammensetzung enthalten, zu vergleichen, wurde analog der in II.b) beschriebenen Methode vorgegangen. Dabei wurde zunächst für die kommerziell erhältlichen Schnellgelierer Isononylbenzoat (Vestinol® INB) und Isodecylbenzoat (Jayflex® MB 10) das Mischungsverhältnis mit dem kommerziell erhältlichen Weichmachers Diisononylcyclohexandicarboxylat (Hexamoll® DINCH®) ermittelt, das eine Geliertemperatur von 150 °C bewirkt, die der Geliertemperatur des kommerziell erhältlichen Weichmachers Palatinol® N entspricht und die für viele Plastisolanwendungen ausreichend ist.

Für Vestinol® INB liegt dieses Mischungsverhältnis bei 55 % Vestinol® INB und 45 % Hexamoll® DINCH® und für Jayflex® MB 10 bei 67% Jayflex® MB 10 und 33 % Hexamoll® DINCH®.

In Figur 2 sind die Gelierkurven der PVC-Plastisole mit Weichmacher-Zusammensetzungen aus den kommerziell erhältlichen Schnellgelierern Vestinol® INB und Jayflex® MB im Vergleich zu den Gelierkurven der PVC-Plastisole, enthaltend die erfindungsgemäß eingesetzten Weichmacher-Zusammensetzungen, zusammengestellt. Als Vergleich sind zudem die Gelierkurven der PVC-Plastisole enthalten, die ausschließlich die kommerziell erhältlichen Weichmacher Hexamoll® DINCH® oder Palatinol® N (DINP) enthalten. Aus der Figur 2 ist sehr gut ersichtlich, dass in den erfindungsgemäß eingesetzten Weichmacher-Zusammensetzungen bereits ein Anteil des Schnellgelierers Di-n-butyladipat von nur 27 % ausreicht, um eine Geliertemperatur von 150 °C zu erzielen, die der Geliertemperatur des kommerziell erhältlichen Weichmachers Palatinol® N entspricht und die für viele Plastisolanwendungen ausreichend ist. Hingegen werden bei den Weichmacher-Zusammensetzungen enthaltend die herkömmlichen Schnellgelierer INB (Vestinol® INB) oder IDB (Jayflex® MB), wesentlich höhere Anteile von 55 % Vestinol® INB bzw. 67 % Jayflex® MB benötigt, um eine Geliertemperatur der Plastisole von 150 °C zu erzielen. Der erfindungsgemäß eingesetzte Schnellgelierer DBA (Di-n-butyladipat) besitzt demnach eine deutlich bessere Gelierwirkung als die herkömmlichen Schnellgelierer INB (Vestinol® INB) und IDB (Jayflex® MB 10).

### II.d) Bestimmung der Prozessflüchtigkeit der erfindungsgemäß eingesetzten Weichmacher-Zusammensetzungen im Vergleich zu Weichmacher-Zusammensetzungen aus kommerziell erhältlichen Schnellgelierern:

Unter der Prozessflüchtigkeit versteht man den Gewichtsverlust an Weichmacher während der Verarbeitung von Plastisolen. Wie unter II.c) beschrieben wurden Plastisole hergestellt mit einer Weichmacher-Zusammensetzung aus 27 % des Schnellgelierers Di-n-butyladipat und 73 % des kommerziell erhältlichen Weichmachers Hexamoll® DINCH® und mit den Weichmacher-Zusammensetzungen aus 55 % des kommerziell erhältlichen Schnellgelierers Vestinol® INB und 45 % des kommerziell erhältlichen Weichmachers Hexamoll® DINCH® sowie 67 % des kommerziell erhältlichen Schnellgelierers Jayflex® MB 10 und 33 % des kommerziell erhältlichen Weichmachers Hexamoll® DINCH®. Es wurde folgende Rezeptur verwendet.

| **Einsatzstoff** | **Anteil [phr]** |
|---|---|
| PVC (Mischung aus 70 Gewichtsteilen Homopolymeres Emulsions-PVC, Markenname Solvin® 367 NC, und 30 Gewichtsteilen Homopolymeres Emulsions-PVC, Markenname Vinnolit® P 70) | 100 |
| Weichmacher-Zusammensetzung | 60 |
| Ba-Zn Stabilisator, Typ Reagens® SLX/781 | 2 |

Als Vergleich wurden zudem Plastisole hergestellt, die ausschließlich die kommerziell erhältlichen Weichmacher Hexamoll® DINCH® oder Palatinol® N (DINP) enthalten.

### Herstellung einer Vorfolie

Um an den Plastisolen anwendungstechnische Eigenschaften bestimmen zu können, muss das flüssige Plastisol in eine verarbeitbare feste Folie überführt werden. Dazu wird das Plastisol bei niedriger Temperatur vorgeliert.

Die Gelierung der Plastisole erfolgte in einem Mathisofen.

### Einstellungen am Mathisofen:

- Abluft: Klappe ganz offen
- Frischluft: offen
- Umluft: maximale Position
- Oberluft/Unterluft: Oberluft Stellung 1

### Herstellprozedur:

Es wurde ein neues Relaispapier in die Einspannvorrichtung am Mathisofen eingespannt. Der Ofen wird auf 140°C vorgeheizt und die Gelierzeit auf 25 s eingestellt. Für die Spalteinstellung wird der Spalt zwischen Papier und Rakel mit der Dickenschablone auf 0,1 mm eingestellt. Die Dickenmessuhr wird auf 0,1 mm gestellt. Dann wird der Spalt auf einen Wert von 0,7 mm auf der Messuhr eingestellt.
Das Plastisol wird auf das Papier aufgetragen und mit dem Rakel glattgestrichen. Anschließend wird über den Startknopf die Einspannvorrichtung in den Ofen gefahren. Nach 25 s fährt die Einspannvorrichtung wieder aus dem Ofen. Das Plastisol ist geliert und die entstandene Folie lässt sich soeben in einem Stück von dem Papier abziehen. Die Dicke dieser Folie beträgt ca. 0,5 mm.

### Bestimmung der Prozessflüchtigkeit:

Zur Bestimmung der Prozessflüchtigkeit werden mit einem Shore-Härte-Stanzeisen aus der Vorfolie je 3 quadratische Probekörper (49 x 49 mm) ausgestanzt, gewogen und anschließend 2 Minuten bei 190°C im Mathisofen geliert. Nach dem Abkühlen werden diese Probekörper zurückgewogen und der Gewichtsverlust in % errechnet. Die Probekörper wurden dazu immer exakt auf der gleichen Stelle des Relaispapiers positioniert.
Wie aus Figur 3 sehr gut ersichtlich, ist die Prozessflüchtigkeit der Weichmacher-Zusammensetzung aus 27 % Di-n-butyladipat und 73 % Hexamoll® DINCH® deutlich niedriger als die Prozessflüchtigkeit der Weichmacher-Zusammensetzungen aus 55 % Vestinol® INB und 45 % Hexamoll® DINCH® sowie 67 % Jayflex® MB und 33 % Hexamoll® DINCH®. Bei der Verarbeitung der Plastisole auf Basis der erfindungsgemäß eingesetzten Weichmacher-Zusammensetzungen geht also deutlich weniger Weichmacher verloren.

Die Prozessflüchtigkeit der Weichmacher-Zusammensetzung aus 27 % Di-n-butyladipat und 73 % Hexamoll® DINCH® ist allerdings höher als die der reinen Weichmacher Hexamoll® DINCH® bzw. Palatinol® N.

### II.e) Bestimmung der Shore A-Härte von Folien von Plastisolen, enthaltend erfindungsgemäß eingesetzte Weichmacher-Zusammensetzungen, im Vergleich zu Folien von Plastisolen, enthaltend Weichmacher-Zusammensetzungen mit kommerziell erhältlichen Schnellgelierern:

Die Shore A-Härte ist ein Maß für die Elastizität von weichgemachten PVC-Artikeln. Je niedriger die Shore-Härte, desto höher die Elastizität der PVC-Artikel.

Für die Bestimmung der Shore A Härte wurden wie unter II.d) beschrieben 49 x 49 mm große Folienstücke aus den Vorfolien ausgestanzt und analog der Flüchtigkeitsprüfung jeweils im Dreierpack 2 min bei 190°C geliert. Insgesamt wurden so 27 Stück Folien geliert. Diese 27 Stücke wurden im Pressrahmen übereinander gelegt und bei 195°C zu einem 10 mm dicken Shore-Klotz gepresst.

### Beschreibung der Shore-Härte Messung:

- Methode: DIN EN ISO 868, Okt. 2003
- Verwendetes Gerät: Digital Durometer Modell DD-3 der Firma Hildebrand
- Probekörper: 49mm x 49mm x 10mm (Länge x Breite x Dicke); gepresst aus ca. 27 Stück 0,5mm dicken Gelierfolien bei einer Temperatur von195°C
- Lagerzeit der Probekörper vor der Messung: 7 Tage im Klimaraum bei 23°C und 50% rel. Luftfeuchtigkeit
- Messzeit: 15 s
- Es werden 10 Einzelwerte gemessen und daraus der Mittelwert berechnet

Wie aus Figur 4 sehr gut ersichtlich, ist die Shore A-Härte der Folie aus dem Plastisol mit der Weichmacher-Zusammensetzung aus 27 % Di-n-butyladipat und 73 % Hexamoll® DINCH® deutlich niedriger als die Shore A-Härte der Folien aus den Plastisolen mit den Weichmacher-Zusammensetzungen aus 55 % Vestinol® INB und 45 % Hexamoll® DINCH® sowie 67 % Jayflex® MB und 33 % Hexamoll® DINCH®. Die erfindungsgemäße Verwendung von Weichmacher-Zusammensetzungen, enthaltend Di-n-butyladipat und Hexamoll® DINCH®, führt also zu einer höheren Elastizität der PVC-Artikel.

Die Shore A-Härte der Folie aus dem Plastisol mit der Weichmacher-Zusammensetzung aus 27 % Di-n-butyladipat und 73 % Hexamoll® DINCH® ist darüber hinaus auch deutlich niedriger als die Shore A-Härte der Folie aus dem Plastisol mit dem reinen Weichmacher Hexamoll® DINCH® und in etwa vergleichbar wie die Shore A-Härte der Folie aus dem Plastisol mit dem reinen Weichmacher Palatinol® N.

### II.f) Bestimmung der Folienflüchtigkeit von Folien von Plastisolen, enthaltend erfindungsgemäß eingesetzte Weichmacher-Zusammensetzungen, im Vergleich zu Folien von Plastisolen, enthaltend Weichmacher-Zusammensetzungen aus kommerziell erhältlichen Schnellgelierern:

Die Folienflüchtigkeit ist ein Maß für die Flüchtigkeit eines Weichmachers im fertigen, weichgemachten PVC-Artikel. Für die Prüfung der Folienflüchtigkeit wurden Plastisole mit einer Weichmacher-Zusammensetzung aus 27 % Di-n-butyladipat und 73 % Hexamoll® DINCH® und Plastisole mit Weichmacher-Zusammensetzungen aus 55 % Vestinol® INB und 45 % Hexamoll® DINCH® sowie 67 % Jayflex® MB und 33 % Hexamoll® DINCH® hergestellt wie unter II.c) beschrieben. Als Vergleich wurden zudem Plastisole hergestellt, die ausschließlich die kommerziell erhältlichen Weichmacher Hexamoll® DINCH® oder Palatinol® N (DINP) enthalten. Für die Prüfungen wurde hier aber nicht erst eine Vorfolie hergestellt, sondern das Plastisol wurde direkt 2 min bei 190°C im Mathisofen geliert. An den so erhaltenen ca. 0,5 mm dicken Folien wurde die Prüfung der Folienflüchtigkeit durchgeführt.

### Prüfung der Folienflüchtigkeit über 24h bei 130°C:

Für die Bestimmung der Folienflüchtigkeit werden aus den 2 min bei 190°C gelierten Plastisolen vier Einzelfolien (150 x 100 mm) ausgeschnitten, gelocht und gewogen. Die Folien werden an einen rotierenden Stern in einen auf 130°C eingestellten Heraeus-Trockenschrank Typ 5042 E gehängt. In dem Schrank wird 18-mal pro Stunde die Luft gewechselt. Dies entspricht 800l/h Frischluft. Nach 24h in dem Schrank werden die Folien entnommen und zurückgewogen. Der Gewichtsverlust in Prozent gibt die Folienflüchtigkeit der Weichmacher-Zusammensetzungen an.

Wie aus Figur 5 sehr gut ersichtlich, ist die Folienflüchtigkeit der Weichmacher-Zusammensetzung aus 27 % Di-n-butyladipat und 73 % Hexamoll® DINCH® deutlich niedriger als die Folienflüchtigkeit der Weichmacher-Zusammensetzungen aus 55 % Vestinol® INB und 45 % Hexamoll® DINCH® sowie 67 % Jayflex® MB und 33 % Hexamoll® DINCH®. Bei PVC-Folien, die die erfindungsgemäß eingesetzte Weichmacher-Zusammensetzungen enthalten, entweicht also im fertigen weichgemachten PVC-Artikel weniger Weichmacher.

Die Folienflüchtigkeit der Weichmacher-Zusammensetzung aus 27 % Di-n-butyladipat und 73 % Hexamoll® DINCH® ist allerdings höher als die der reinen Weichmacher Hexamoll® DINCH® bzw. Palatinol® N.

### II.g) Bestimmung der Bruchdehnung von Folien von Plastisolen, enthaltend erfindungsgemäß eingesetzte Weichmacher-Zusammensetzungen, im Vergleich zu Folien von Plastisolen, enthaltend Weichmacher-Zusammensetzungen aus kommerziell erhältlichen Schnellgelierern:

Die mechanischen Eigenschaften von weichgemachten PVC-Artikeln werden beispielsweise mit Hilfe des Parameters Bruchdehnung charakterisiert. Je höher dieser Wert, desto besser die mechanischen Eigenschaften des weichgemachten PVC-Artikels.

Für die Prüfung der Bruchdehnung wurden Plastisole mit einer Weichmacher-Zusammensetzung aus 27 % Di-n-butyladipat und 73 % Hexamoll® DINCH® und Plastisole mit den Weichmacher-Zusammensetzungen aus 55 % Vestinol® INB und 45 % Hexamoll® DINCH® sowie 67 % Jayflex® MB und 33 % Hexamoll® DINCH® hergestellt, wie unter II.c) beschrieben. Als Vergleich wurden zudem Plastisole hergestellt, die ausschließlich die kommerziell erhältlichen Weichmacher Hexamoll® DINCH® oder Palatinol® N (DINP) enthalten. Für die Prüfungen wurde hier aber nicht erst eine Vorfolie hergestellt, sondern das Plastisol wurde direkt 2 min bei 190°C im Mathisofen geliert. An den so erhaltenen ca. 0,5 mm dicken Folien wurde die Prüfung der Bruchdehnung durchgeführt.

### Bestimmung der Bruchdehnung:

- Methode: Prüfung nach DIN EN ISO 527 Teil 1 und Teil 3
- Maschine: Zwicki Typ TMZ 2.5/TH1S
- Probekörper: Folienstreifen Typ 2 nach DIN EN ISO 527 Teil 3, 150 mm lang, 15 mm breit, ausgestanzt
- Anzahl Probekörper pro Prüfung: 10 Proben
- Klima: Normklima 23°C (+- 1°C), 50% relative Luftfeuchtigkeit
- Lagerzeit der Probekörper vor der Messung: 7 Tage im Normklima
- Klemmen: Glatt-Konvex mit 6 bar Klemmendruck
- Einspannlänge: 100 mm
- Messlänge (= Einspannlänge): 100 mm
- Prüfgeschwindigkeit: 100 mm/min

Wie aus Figur 6 sehr gut ersichtlich, ist der Wert der Bruchdehnung für die Folie, hergestellt aus dem Plastisol enthaltend 27 % Di-n-butyladipat und 73 % Hexamoll® DINCH®, deutlich höher als die Werte für die Folien, hergestellt aus den Plastisolen enthaltend 55 % Vestinol® INB und 45 % Hexamoll® DINCH® sowie 67 % Jayflex® MB und 33 % Hexamoll® DINCH® und in etwa vergleichbar oder sogar leicht besser als die Werte für die Folien, hergestellt aus den Plastisolen, die ausschließlich die reinen Weichmachern Hexamoll® DINCH® und Palatinol® N enthalten.

### II.h) Bestimmung der Verträglichkeit (Permanenz) von Folien von Plastisolen, enthaltend erfindungsgemäß eingesetzte Weichmacher-Zusammensetzungen, im Vergleich zu Folien von Plastisolen, enthaltend Weichmacher-Zusammensetzungen aus kommerziell erhältlichen Schnellgelierern:

Die Verträglichkeit (Permanenz) von Weichmachern in weichgemachten PVC-Artikeln charakterisiert, in welchem Ausmaß Weichmacher während des Gebrauchs der weichgemachten PVC-Artikel zum Ausschwitzen neigen und dadurch die Gebrauchseigenschaften des PVC-Artikels beeinträchtigen.

Für die Prüfung der Verträglichkeit (Permanenz) wurden Plastisole mit der erfindungsgemäßen Weichmacher-Zusammensetzung aus 27 % Di-n-butyladipat und 73 % Hexamoll® DINCH® und Plastisole mit den Weichmacher-Zusammensetzungen aus 55 % Vestinol® INB und 45 % Hexamoll® DINCH® sowie 67 % Jayflex® MB und 33 % Hexamoll® DINCH® hergestellt, wie unter II.c) beschrieben. Als Vergleich wurden zudem Plastisole hergestellt, die ausschließlich die kommerziell erhältlichen Weichmacher Hexamoll® DINCH® oder Palatinol® N (DINP) enthalten. Für die Prüfungen wurde hier aber nicht erst eine Vorfolie hergestellt, sondern das Plastisol wurde direkt 2 min bei 190°C im Mathisofen geliert. An den so erhaltenen ca. 0,5 mm dicken Folien wurde die Prüfung der mechanischen Eigenschaften durchgeführt.

### Prüfmethode:

### Zweck des Prüfverfahrens

Die Prüfung dient zur qualitativen und quantitativen Messung der Verträglichkeit von Weich- PVC- Rezepturen. Sie wird bei erhöhter Temperatur (70 °C) und erhöhter Luftfeuchte (100 % relative Luftfeuchtigkeit) durchgeführt. Die erhaltenen Daten werden gegen die Lagerzeit ausgewertet.

### Probekörper:

Zur Standardprüfung werden je Rezeptur 10 Prüfkörper (Folien) mit einer Größe von 75 x 110 x 0,5 mm verwendet. Die Folien werden an der Breitseite gelocht, beschriftet und gewogen. Die Beschriftung muss wischfest sein und kann z. B. mit dem Lötkolben erfolgen.

### Prüfgeräte:

Wärmeschrank, Analysenwaage, Temperaturmessgerät mit Fühler zur Messung der Innenraumtemperatur des Wärmeschrankes, Becken aus Glas, Metallgestelle aus nichtrostendem Material;
Prüftemperatur: 70°C
Prüfmedium: entstehender Wasserdampf bei 70°C aus vollentsalztem Wasser

### Durchführung:

Es wird die Temperatur im Innenraum des Wärmeschrankes auf die geforderten 70 °C eingestellt. Die Prüffolien werden auf ein Drahtgestell aufgehängt und in eine Glaswanne, die etwa 5 cm hoch mit Wasser (VE-Wasser) gefüllt ist, hineingestellt. Es dürfen nur Folien gleicher Zusammensetzung in einem gekennzeichneten und nummerierten Becken gelagert werden, um Beeinflussung zu vermeiden und die Entnahme nach den jeweiligen Lagerzeiten zu erleichtern.

Die Glaswanne wird mit einer Polyethylen-Folie wasserdampfdicht (!) verschlossen, damit der später in der Glaswanne entstehende Wasserdampf nicht entweichen kann.

### Lagerzeit:

Nach 1-, 3, 7-, 14- und 28-Tagen-Lagerzeit werden jeweils 2 Folien (Doppelbestimmung) aus der Glaswanne entnommen und für 1 Std. frei hängend an der Luft klimatisiert. Danach wird die Folie im Abzug mit Methanol gereinigt (mit Methanol angefeuchtetes Handtuch) und gewogen (Naßwert). Anschließend wird die Folie für 16 h bei 70 °C in einem Trockenschrank (natürliche Konvektion) frei hängend getrocknet. Nach Entnahme aus dem Trockenschrank wird die Folie für 1 Std. im Labor frei hängend konditioniert und anschließend erneut gewogen (Trockenwert). Als Prüfergebnis angegeben wird jeweils der arithmetische Mittelwert der Gewichtsänderungen.

Wie aus Figur 7 sehr gut ersichtlich, ist das Ausschwitzverhalten der Weichmacher-Zusammensetzung aus 27 % Di-n-butyladipat und 73 % Hexamoll® DINCH® deutlich besser als das Ausschwitzverhalten der Weichmacher-Zusammensetzungen aus 55 % Vestinol® INB und 45 % Hexamoll® DINCH® sowie 67 % Jayflex® MB und 33 % Hexamoll® DINCH®, allerdings schlechter als das Ausschwitzverhalten der reinen Weichmacher Hexamoll® DINCH® und Palatinol® N.

## Patentansprüche

1. Formmasse, enthaltend wenigstens ein Polymer und eine Weichmacher-Zusammensetzung, enthaltend
a) wenigstens eine Verbindung der allgemeinen Formel (I),
R¹-O-C(=O)-X-C(=O)-O-R² (I)
worin
X für eine unverzweigte oder verzweigte C₂-C₈-Alkylengruppe oder eine unverzweigte oder verzweigte C₂-C₈-Alkenylengruppe, enthaltend wenigstens eine Doppelbindung, steht
und
R¹ und R² unabhängig voneinander ausgewählt sind unter C₃-C₅-Alkyl,
b) wenigstens eine Verbindung der allgemeinen Formel (II), 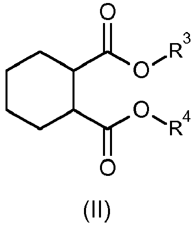 worin R³ und R⁴ unabhängig voneinander ausgewählt sind unter verzweigten und unverzweigten C₇-C₁₂-Alkylresten,
wobei der Anteil der Verbindungen (I) in der Formmasse wenigstens 11 Gewichtsteile bezogen auf 100 Gewichtsteile Polymer (phr) beträgt.

2. Formmasse nach Anspruch 1, wobei in den Verbindungen der allgemeinen Formel (I) X für eine unverzweigte C₂-C₅-Alkylengruppe steht.

3. Formmasse nach Anspruch 1 und 2, wobei in den Verbindungen der allgemeinen Formel (I) R¹ und R² unabhängig voneinander für n-Butyl, Isobutyl, n-Pentyl, 2-Methylbutyl oder 3-Methylbutyl stehen.

4. Formmasse nach einem der vorangehenden Ansprüche, wobei in den Verbindungen der allgemeinen Formel (I) R¹ und R² beide für n-Butyl stehen.

5. Formmasse nach einem der vorangehenden Ansprüche, wobei in den Verbindungen der allgemeinen Formel (II) R³ und R⁴ beide für 2-Ethylhexyl, beide für Isononyl oder beide für 2-Propylheptyl stehen.

6. Formmasse nach einem der vorangehenden Ansprüche, wobei die Weichmacher-Zusammensetzung gegebenenfalls einen weiteren von den Verbindungen (I) und (II) verschiedenen Weichmacher enthält, der ausgewählt ist unter Phthalsäuredialkylestern, Phthalsäurealkylaralkylestern, Terephthalsäuredialkylestern, Trimellitsäuretrialkylestern, Benzoesäurealkylestern, Dibenzoesäureestern von Glycolen, Hydroxybenzoesäureestern, Estern von gesättigten Monocarbonsäuren, von Verbindungen (I) verschiedenen Estern gesättigter Dicarbonsäuren, von Verbindungen (I) verschiedenen Estern ungesättigter Dicarbonsäuren, Amiden und Estern von aromatischen Sulfonsäuren, Alkylsulfonsäureestern, Glycerinestern, Isosorbidestern, Phosphorsäureestern, Citronensäuretriestern, Alkylpyrrolidonderivaten, 2,5-Furandicarbonsäureestern, 2,5-Tetrahydrofurandicarbonsäureestern, epoxidierten Pflanzenölen und epoxidierten Fettsäuremonoalkylestern, Polyestern aus aliphatischen und/oder aromatischen Polycarbonsäuren mit wenigstens zweiwertigen Alkoholen.

7. Formmasse nach einem der vorangegangenen Ansprüche, wobei es sich bei dem Polymer um ein thermoplastisches Polymer handelt, das ausgewählt ist unter
- Homo- oder Copolymeren, die wenigstens ein Monomer einpolymerisiert enthalten, das ausgewählt ist unter C₂-C₁₀-Monoolefinen, 1,3-Butadien, 2-Chlor-1,3-butadien, Vinylalkohol und dessen C₂-C₁₀-Alkylestern, Vinylchlorid, Vinylidenchlorid, Vinylidenfluorid, Tetrafluorethylen, Glycidylacrylat, Glycidylmethacrylat, Acrylaten und Methacrylaten von C₁-C₁₀-Alkoholen, Vinylaromaten, (Meth)acrylnitril, Maleinsäureanhydrid und α,β-ethylenisch ungesättigten Mono- und Dicarbonsäuren,
- Homo- und Copolymeren von Vinylacetalen,
- Polyvinylestern,
- Polycarbonaten,
- Polyestern,
- Polyethern,
- Polyetherketonen,
- thermoplastischen Polyurethanen,
- Polysulfiden,
- Polysulfonen,
- Polyethersulfonen,
- Cellulosealkylestern,
und Mischungen davon.

8. Formmasse nach Anspruch 7, wobei das thermoplastische Polymer ausgewählt ist unter Polyvinylchlorid (PVC), Polyvinylbutyral (PVB), Homo- und Copolymeren von Vinylacetat, Homo- und Copolymeren von Styrol, Polyacrylate, thermoplastischen Polyurethanen (TPU) oder Polysulfiden.

9. Formmasse nach einem der Ansprüche 7 oder 8, wobei es sich bei dem thermoplastischen Polymer um Polyvinylchlorid (PVC) handelt.

10. Formmasse nach einem der vorangegangenen Ansprüche, wobei es sich bei dem Polymer um ein Elastomer handelt, bevorzugt ausgewählt unter natürlichen Kautschuken, synthetischen Kautschuken und Mischungen davon.

11. Verwendung einer Weichmacher-Zusammensetzung, enthaltend wenigstens eine Verbindung der allgemeinen Formel (I) und wenigstens eine Verbindung der allgemeinen Formel (II), wie in einem der Ansprüche 1 bis 6 definiert, als Weichmacher für thermoplastische Polymere und Elastomere, wobei der Anteil der Verbindungen (I) wenigstens 11 Gewichtsteile bezogen auf 100 Gewichtsteile des weichzumachenden thermoplastischen Polymers oder Elastomers (phr) beträgt.

12. Verwendung einer Weichmacher-Zusammensetzung enthaltend wenigstens eine Verbindung der allgemeinen Formel (I) und wenigstens eine Verbindung der allgemeinen Formel (II), wie in einem der Ansprüche 1 bis 6 definiert, als Weichmacher in einem Plastisol, wobei der Anteil der Verbindungen (I) wenigstens 11 Gewichtsteile bezogen auf 100 Gewichtsteile des weichzumachenden thermoplastischen Polymers oder Elastomers (phr) beträgt.

13. Verwendung einer Formmasse, wie in einem der Ansprüche 1 bis 10 definiert, zur Herstellung von Formkörpern und Folien, wie beispielsweise Gehäusen von Elektrogeräten, Computergehäusen, Werkzeugen, Rohrleitungen, Kabeln, Schläuchen, Draht-Ummantelungen, Fensterprofilen, Komponenten für den Fahrzeugbau, Reifen, Möbeln, Schaumstoff für Polster und Matratzen, Planen, Dichtungen, Verbundfolien, Schallplatten, Kunstleder, Verpackungsbehältern, Klebebandfolien oder Beschichtungen.

14. Verwendung einer Formmasse, wie in einem der Ansprüche 1 bis 10 definiert, zur Herstellung von Formkörpern und Folien, die direkt mit Menschen oder Nahrungsmitteln in Kontakt kommen.

15. Verwendung wie in Anspruch 14 definiert, wobei es sich bei den Formkörpern und Folien, die direkt mit Menschen oder Nahrungsmitteln in Kontakt kommen, um Medizinprodukte, Hygieneprodukte, Lebensmittelverpackungen, Produkte für den Innenraumbereich, Spielzeuge und Kinderpflegeartikel, Sport- und Freizeitprodukte, Bekleidung oder Fasern für Gewebe handelt.

## Claims

1. A molding compound containing at least one polymer and one plasticizer composition, containing
a) at least one compound of the general formula (I),
R¹-O-C(=O)-X-C(=O)-O-R² (I)
wherein
X stands for an unbranched or branched C₂-C₈ alkylene group or an unbranched or branched C₂-C₈ alkenylene group, containing at least one double bond,
and
R¹ and R² are mutually independently selected from C₃-C₅ alkyl,
b) at least one compound of the general formula (II), 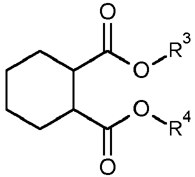 wherein R³ and R⁴ are mutually independently selected from branched and unbranched C₇-C₁₂ alkyl residues,
**characterized in that** the content of the compounds (I) in the molding compound is at least 11 parts by weight based on 100 parts by weight polymer (phr).

2. The molding compound according to claim 1, **characterized in that** in the compounds of the general formula (I) X stands for an unbranched C₂-C₅ alkylene group.

3. The molding compound according to claim 1 and 2, **characterized in that** in the compounds of the general formula (I), R¹ and R² mutually independently stand for n-butyl, isobutyl, n-pentyl, 2-methylbutyl or 3-methylbutyl.

4. The molding compound according to one of the previous claims, **characterized in that** in the compounds of the general formula (I), R¹ and R² both stand for n-butyl.

5. The molding compound according to one of the previous claims, **characterized in that** in the compounds of the general formula (II) R³ and R⁴ both stand for 2-ethylhexyl, both stand for isononyl or both stand for 2-propylheptyl.

6. The molding compound according to one of the previous claims, **characterized in that** the plasticizer composition optionally contains a further plasticizer different from the compounds (I) and (II), which is selected from dialkyl esters of phthalic acid, alkyl aralkyl esters of phthalic acid, dialkyl esters of terephthalic acid, trialkyl esters of trimellitic acid, alkyl esters of benzoic acid, dibenzoate esters of glycols, hydroxybenzoate esters, esters of saturated monocarboxylic acids, saturated dicarboxylate esters different from compounds (I), unsaturated dicarboxylate esters different from compounds (I), amides and esters of aromatic sulfonic acids, alkylsulfonate esters, glycerin esters, isosorbide esters, phosphate esters, citrate triesters, alkylpyrrolidone derivatives, esters of 2,5-furandicarboxylic acid, esters of 2,5-tetrahydrofurandicarboxylic acid, epoxidized plant oils and expoxidized monoalkyl esters of fatty acids, and polyesters of aliphatic and/or aromatic polycarboxylic acids with at least dihydric alcohols.

7. The molding compound according to one of the previous claims, **characterized in that** the polymer is a thermoplastic polymer which is selected
from
- homo- or copolymers which contain at least one monomer incorporated by polymerization, which is selected from C₂-C₁₀ monoolefins, 1,3-butadiene, 2-chloro-1,3-butadiene, vinyl alcohol and C₂-C₁₀ alkyl esters thereof, vinyl chloride, vinylidene chloride, vinylidene fluoride, tetrafluoroethylene, glycidyl acrylate, glycidyl methacrylate, acrylates and methacrylates of C₁-C₁₀ alcohols, vinylaromatics, (meth)acrylonitrile, maleic anhydride and · · · -ethylenically unsaturated mono- and dicarboxylic acids,
- homo- and copolymers of vinylacetals,
- polyvinyl esters,
- polycarbonates,
- polyesters,
- polyethers,
- polyether ketones,
- thermoplastic polyurethanes,
- polysulfides,
- polysulfones,
- polyether sulfones,
- cellulose alkyl esters,
and mixtures thereof.

8. The molding compound according to claim 7, **characterized in that** the thermoplastic polymer is selected from polyvinyl chloride (PVC), polyvinylbutyral (PVB), homo- and copolymers of vinyl acetate, homo- and copolymers of styrene, polyacrylates, thermoplastic polyurethanes (TPU) or polysulfides.

9. The molding compound according to one of claims 7 or 8, **characterized in that** the thermoplastic polymer is polyvinyl chloride (PVC).

10. The molding compound according to one of the previous claims, **characterized in that** the polymer is an elastomer, preferably selected from natural rubbers, synthetic rubbers and mixtures thereof.

11. The use of a plasticizer composition, containing at least one compound of the general formula (I) and at least one compound of the general formula (II) as defined in one of claims 1 to 6, as plasticizer for thermoplastic polymers and elastomers, **characterized in that** the content of the compounds (I) is at least 11 parts by weight based on 100 parts by weight of the thermoplastic polymer or elastomer to be plasticized (phr).

12. The use of a plasticizer composition containing at least one compound of the general formula (I) and at least one compound of the general formula (II) as defined in one of claims 1 to 6 as plasticizer in a plastisol, **characterized in that** the content of the compounds (I) is at least 11 parts by weight based on 100 parts by weight of the thermoplastic polymer or elastomer to be plasticized (phr).

13. The use of a molding compound as defined in one of claims 1 to 10, for the production of molded articles and films, such as for example housings of electrical appliances, computer housings, tools, pipes, cables, hoses, wire coatings, window profiles, components for vehicle manufacture, tires, furniture, foam for cushions and mattresses, tarpaulins, seals, composite sheets, records, artificial leather, packaging containers, adhesive tape films or coatings.

14. The use of a molding compound as defined in one of claims 1 to 10 for the production of molded articles and films which come directly into contact with people or foodstuffs.

15. The use as defined in claim 14, **characterized in that** the molded articles and films which come directly into contact with people or foodstuffs are medicinal products, hygiene products, food packaging, products for the indoor sector, toys and child care articles, sport and leisure products, clothing or fibers for fabrics.

## Revendications

1. Masse de moulage, contenant au moins un polymère et une composition de plastifiant, contenant
a) au moins un composé de formule générale (I)
R¹-O-C(=O)-X-C(=O)-O-R² (I)
dans laquelle
X représente un groupe C₂-C₈-alkylène non ramifié ou ramifié ou un groupe C₂-C₈-alcénylène non ramifié ou ramifié, contenant au moins une double liaison
et
R¹ et R² sont choisis, indépendamment l'un de l'autre, parmi C₃-C₅-alkyle,
b) au moins un composé de formule générale (II) 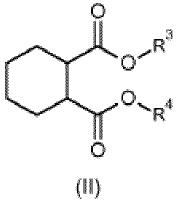 dans laquelle R³ et R⁴ sont choisis, indépendamment l'un de l'autre, parmi les radicaux C₇-C₁₂-alkyle ramifiés et non ramifiés,
la proportion des composés (I) dans la masse de moulage représentant au moins 11 parties en poids par rapport à 100 parties en poids de polymère (pce).

2. Masse de moulage selon la revendication 1, X représentant un groupe C₂-C₅-alkylène non ramifié dans les composés de formule générale (I).

3. Masse de moulage selon la revendication 1 et 2, R¹ et R² représentant, indépendamment l'un de l'autre, n-butyle, isobutyle, n-pentyle, 2-méthylbutyle ou 3-méthylbutyle dans les composés de formule générale (I).

4. Masse de moulage selon l'une quelconque des revendications précédentes, R¹ et R² dans les composés de formule générale (I) représentant tous les deux n-butyle.

5. Masse de moulage selon l'une quelconque des revendications précédentes, R³ et R⁴ dans les composés de formule générale (II) représentant tous les deux 2-éthylhexyle, tous les deux isononyle ou tous les deux 2-propylheptyle.

6. Masse de moulage selon l'une quelconque des revendications précédentes, la composition de plastifiant contenant le cas échéant un autre plastifiant différent des composés (I) et (II), qui est choisi parmi les esters dialkyliques de l'acide phtalique, les esters aralkyliques de l'acide phtalique, les esters dialkyliques de l'acide téréphtalique, les esters trialkyliques de l'acide trimellitique, les esters alkyliques de l'acide benzoïque, les esters de glycols de l'acide dibenzoïque, les esters de l'acide hydroxybenzoïque, les esters d'acides monocarboxyliques saturés, les esters d'acides dicarboxyliques saturés différents des composés (I), les esters d'acides dicarboxyliques insaturés différents des composés (I), les amides et les esters d'acides sulfoniques aromatiques, les esters d'acides alkylsulfoniques, les esters de glycérol, les esters d'isosorbide, les esters de l'acide phosphorique, les triesters de l'acide citrique, les dérivés d'alkylpyrrolidone, les esters de l'acide 2,5-furannedicarboxylique, les esters de l'acide 2,5-tétrahydrofurannedicarboxylique, les huiles végétales époxydées et les esters monoalkyliques d'acides gras époxydés, les polyesters d'acides polycarboxyliques aliphatiques et/ou aromatiques avec des alcools au moins divalents.

7. Masse de moulage selon l'une quelconque des revendications précédentes, le polymère étant un polymère thermoplastique choisi parmi
- les homopolymères ou les copolymères, qui contiennent au moins un monomère sous forme copolymérisée, qui est choisi parmi les C₂-C₁₀-monooléfines, le 1,3-butadiène, le 2-chloro-1,3-butadiène, l'alcool vinylique et ses esters d'alkyle en C₂-C₁₀, le chlorure de vinyle, le chlorure de vinylidène, le fluorure de vinylidène, le tétrafluoroéthylène, l'acrylate de glycidyle, le méthacrylate de glycidyle, les acrylates et les méthacrylates d'alcools en C₁-C₁₀, les aromatiques de vinyle, les (méth)acrylonitriles, l'anhydride de l'acide maléique et les acides monocarboxyliques et dicarboxyliques éthyléniquement α,β-insaturés,
- les homopolymères et copolymères de vinylacétals,
- les poly(esters de vinyle),
- les polycarbonates
- les polyesters,
- les polyéthers,
- les polyéthercétones,
- les polyuréthanes thermoplastiques,
- les polysulfures,
- les polysulfones,
- les polyéthersulfones,
- les esters alkyliques de cellulose
et leurs mélanges.

8. Masse de moulage selon la revendication 7, le polymère thermoplastique étant choisi parmi le poly(chlorure de vinyle) (PVC), le polyvinylbutyral (PVB), les homopolymères et les copolymères d'acétate de vinyle, les homopolymères et les copolymères de styrène, les polyacrylates, les polyuréthanes thermoplastiques (TPU) ou les polysulfures.

9. Masse de moulage selon l'une quelconque des revendications 7 ou 8, le polymère thermoplastique étant le poly(chlorure de vinyle) (PVC).

10. Masse de moulage selon l'une quelconque des revendications précédentes, le polymère étant un élastomère, de préférence choisi parmi les caoutchoucs naturels, les caoutchoucs synthétiques et leurs mélanges.

11. Utilisation d'une composition de plastifiant, contenant au moins un composé de formule générale (I) et au moins un composé de formule générale (II), tels que définis dans l'une quelconque des revendications 1 à 6, comme plastifiant pour des polymères thermoplastiques et des élastomères, la proportion des composés (I) représentant au moins 11 parties en poids par rapport à 100 parties en poids du polymère thermoplastique ou de l'élastomère à plastifier (pce).

12. Utilisation d'une composition de plastifiant, contenant au moins un composé de formule générale (I) et au moins un composé de formule générale (II), tels que définis dans l'une quelconque des revendications 1 à 6, comme plastifiant dans un plastisol, la proportion des composés (I) représentant au moins 11 parties en poids par rapport à 100 parties en poids du polymère thermoplastique ou de l'élastomère à plastifier (pce).

13. Utilisation d'une masse de moulage telle que définie dans l'une quelconque des revendications 1 à 10, pour la fabrication de corps façonnés et de feuilles, tels que par exemple des boîtiers d'appareils électriques, des boîtiers d'ordinateur, des outils, des conduites tubulaires, des câbles, des tuyaux flexibles, des gaines de fil, des profilés de fenêtre, des composants pour la construction de véhicules, des pneus, des meubles, des mousses pour les rembourrages et les matelas, des bâches, des joints d'étanchéité, des feuilles composites, des plaques d'isolation, le cuir synthétique, des récipients d'emballage, des feuilles pour ruban adhésif ou des revêtements.

14. Utilisation d'une masse de moulage telle que définie dans l'une quelconque des revendications 1 à 10, pour la fabrication de corps façonnés et de feuilles qui entrent en contact direct avec les hommes ou les aliments.

15. Utilisation telle que définie dans la revendication 14, les corps façonnés et les feuilles qui entrent en contact direct avec les hommes ou les aliments étant des produits médicaux, des produits hygiéniques, des emballages alimentaires, des produits pour l'intérieur, des jouets et des articles de soin pour les enfants, des produits pour le sport et les loisirs, de l'habillement ou des fibres pour des tissus.
